(19) Europäisches Patentamt / European Patent Office / Office européen des brevets

(11) **EP 4 741 933 A1**

(12) **EUROPEAN PATENT APPLICATION**

(43) Date of publication:
**13.05.2026 Bulletin 2026/20**

(21) Application number: **25173240.0**

(22) Date of filing: **29.04.2025**

(51) International Patent Classification (IPC):
***G03G 5/047*** *(2006.01)* ***G03G 5/05*** *(2006.01)*
***G03G 5/10*** *(2006.01)* ***G03G 5/14*** *(2006.01)*

(52) Cooperative Patent Classification (CPC):
**G03G 5/104; G03G 5/047; G03G 5/056; G03G 5/0564; G03G 5/144**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.11.2024 JP 2024197018**

(71) Applicant: **FUJIFILM Business Innovation Corp.**
**Minato-ku**
**Tokyo (JP)**

(72) Inventors:
- **OYAMADA, Yuki**
  **Ebina-shi, Kanagawa (JP)**
- **KIGOSHI, Yoichi**
  **Ebina-shi, Kanagawa (JP)**
- **KANO, Fuyuki**
  **Ebina-shi, Kanagawa (JP)**
- **IWASAKI, Masahiro**
  **Minamiashigara-shi, Kanagawa (JP)**
- **KUSANO, Keisuke**
  **Ebina-shi, Kanagawa (JP)**
- **FUJII, Ryosuke**
  **Ebina-shi, Kanagawa (JP)**
- **OKAZAKI, Yuto**
  **Ebina-shi, Kanagawa (JP)**
- **TAKAOKA, Kohei**
  **Ebina-shi, Kanagawa (JP)**
- **IDE, Kenta**
  **Ebina-shi, Kanagawa (JP)**
- **SASAKI, Tomoya**
  **Ebina-shi, Kanagawa (JP)**

(74) Representative: **Becker Kurig & Partner**
**Patentanwälte mbB**
**Bavariastraße 7**
**80336 München (DE)**

(54) **ELECTROPHOTOGRAPHIC PHOTORECEPTOR, PROCESS CARTRIDGE, AND IMAGE FORMING APPARATUS**

(57) An electrophotographic photoreceptor includes a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and an electrostatic capacity of the undercoat layer is $1.0 \times 10^{-10}$ F or more and $3.0 \times 10^{-9}$ F or less,

FORMULA (A)

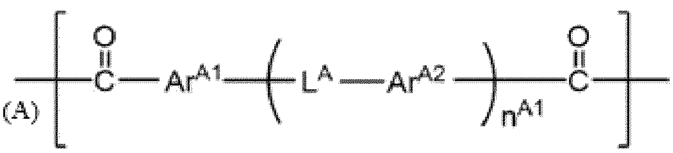

FORMULA (B)

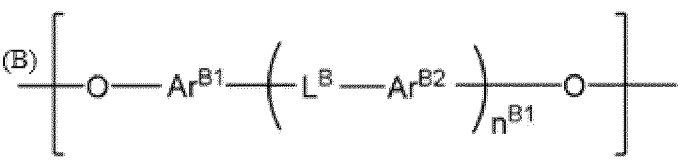

in Formula (A), $Ar^{A1}$ and $Ar^{A2}$ are each independently an aromatic ring which may have a substituent, $L^A$ is a single bond or



EP 4 741 933 A1

a divalent linking group, and $n^{A1}$ is 0, 1, or 2,
in Formula (B), $Ar^{B1}$ and $Ar^{B2}$ are each independently an aromatic ring which may have a substituent, $L^B$ is a single bond, an oxygen atom, a sulfur atom, or -C($Rb^1$)($Rb^2$)-, and $n^{B1}$ is 0, 1, or 2, where $Rb^1$ and $Rb^2$ are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and $Rb^1$ and $Rb^2$ may be bonded to each other to form a cyclic alkyl group.

**Description**

BACKGROUND OF THE INVENTION

(i) Field of the Invention

The present disclosure relates to an electrophotographic photoreceptor, a process cartridge, and an image forming apparatus.

(ii) Description of Related Art

JP2013-242483A discloses an electrophotographic photoreceptor including a support, an undercoat layer provided on the support, the undercoat layer containing at least a binder resin, metal oxide particles, and an electron-accepting compound having an anthraquinone structure, in which a content of the electron-accepting compound is 0.5% by mass or more and 1.5% by mass or less with respect to the metal oxide particles, and a contact angle of the metal oxide particles with water is 7 degrees or more and 12 degrees or less, and a photosensitive layer provided on the undercoat layer.

JP6838324B discloses an electrophotographic photoreceptor including a conductive substrate, an undercoat layer provided on the conductive substrate, the undercoat layer containing a binder resin, metal oxide particles, and an electron-accepting compound having an anthraquinone skeleton represented by General Formula (1A), in which a reflectivity RL of the undercoat layer to light in a wavelength range of 470 nm or more and 510 nm or less is 2% or more and 5% or less, and a photosensitive layer provided on the undercoat layer.

JP2024-043372A discloses an electrophotographic photoreceptor including a conductive substrate, an undercoat layer provided on the conductive substrate, a charge generation layer provided on the undercoat layer, a charge transport layer provided on the charge generation layer, and a protective layer provided on the charge transport layer, in which the undercoat layer contains a conductive agent, the number of primary particles of the conductive agent is 58% or less with respect to the total number of primary particles of the conductive agent and the number of secondary particles of the conductive agent, and the charge mobility $\mu$ (CTL) of the charge transport layer and the charge mobility $\mu$ (OCL) of the protective layer satisfy $\mu$ (CTL) $\geq 1.0 \times 10^{-5}$ ($cm^2/Vs$) and $\mu$ (OCL) $\geq 0.68 \times 10^{-5}$ ($cm^2/Vs$).

SUMMARY OF THE INVENTION

An object of the present disclosure is to provide an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin having a dicarboxylic acid unit represented by Formula (A) and a diol unit represented by Formula (B), and a potential variation after formation of an electrostatic latent image is suppressed as compared with a case where an electrostatic capacity of the undercoat layer is less than $1.0 \times 10^{-10}$ F or more than $3.0 \times 10^{-9}$ F.

Specific methods for achieving the above-described object include the following aspects.

<1> According to a first aspect of the present disclosure, there is provided an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and an electrostatic capacity of the undercoat layer is $1.0 \times 10^{-10}$ F or more and $3.0 \times 10^{-9}$ F or less,

FORMULA (A)
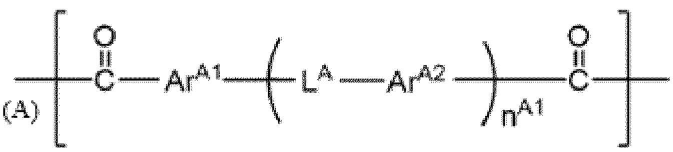

FORMULA (B)

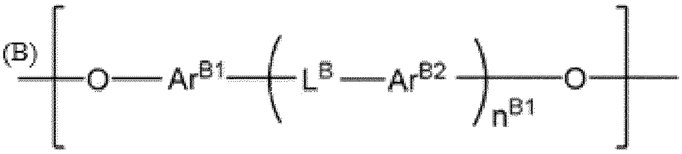

in Formula (A), $Ar^{A1}$ and $Ar^{A2}$ are each independently an aromatic ring which may have a substituent, $L^A$ is a single bond or a divalent linking group, and $n^{A1}$ is 0, 1, or 2,

in Formula (B), $Ar^{B1}$ and $Ar^{B2}$ are each independently an aromatic ring which may have a substituent, $L^B$ is a single bond, an oxygen atom, a sulfur atom, or $-C(Rb^1)(Rb^2)-$, and $n^{B1}$ is 0, 1, or 2, where $Rb^1$ and $Rb^2$ are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and $Rb^1$ and $Rb^2$ may be bonded to each other to form a cyclic alkyl group.

<2> According to a second aspect of the present disclosure, there is provided the electrophotographic photoreceptor according to <1>, in which the charge transport layer may have a relative permittivity of 3.0 or more and 5.0 or less.

<3> According to a third aspect of the present disclosure, there is provided the electrophotographic photoreceptor according to <1> or <2>, in which a ratio of a relative permittivity of the charge transport layer to a relative permittivity of the undercoat layer (a relative permittivity of the charge transport layer/a relative permittivity of the undercoat layer) may be 0.010 or more and 0.400 or less.

<4> According to a fourth aspect of the present disclosure, there is provided the electrophotographic photoreceptor according to any one of <1> to <3>, in which the undercoat layer may contain zinc oxide particles to which an electron-accepting compound is applied, in an amount of 62% by mass or more and 75% by mass or less with respect to the undercoat layer.

<5> According to a fifth aspect of the present disclosure, there is provided the electrophotographic photoreceptor according to <4>, in which the electron-accepting compound may be an anthraquinone derivative having three OH groups or having two OH groups and one alkoxy group.

<6> According to a sixth aspect of the present disclosure, there is provided the electrophotographic photoreceptor according to <5>, in which the anthraquinone derivative may be an alizarin derivative represented by Formula (C),

FORMULA (C)

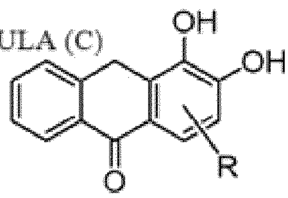

in Formula (C), R represents a hydroxyl group or an alkoxy group having 1 or more and 10 or less of carbon atoms.

<7> According to a seventh aspect of the present disclosure, there is provided the electrophotographic photoreceptor according to any one of <1> to <6>, in which a film thickness of the undercoat layer may be 17 μm or more and 35 μm or less.

<8> According to an eighth aspect of the present disclosure, there is provided the electrophotographic photoreceptor according to any one of <1> to <7>, in which the charge transport layer further contains a polycarbonate resin, and the polyarylate resin and a polycarbonate resin each may have a constitutional unit including biphenyl represented by Formula (BP),

FORMULA (BP)

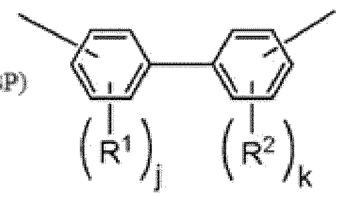

in Formula (BP), j is an integer of 0 or greater and 4 or less, j pieces of $R^1$'s are each independently a methyl group or an ethyl group, k is an integer of 0 or greater and 4 or less, and k pieces of $R^2$'s are each independently a methyl group or an ethyl group.

<9> According to a ninth aspect of the present disclosure, there is provided a process cartridge including the

electrophotographic photoreceptor according to any one of <1> to <8>, in which the process cartridge may be attachable to and detachable from an image forming apparatus.

<10> According to a tenth aspect of the present disclosure, there is provided an image forming apparatus including the electrophotographic photoreceptor according to any one of <1> to <8>, a charging unit that charges a surface of the electrophotographic photoreceptor, an electrostatic latent image forming unit that forms an electrostatic latent image on the charged surface of the electrophotographic photoreceptor, a developing unit that develops the electrostatic latent image formed on the surface of the electrophotographic photoreceptor with a developer containing a toner to form a toner image, and a transfer unit that transfers the toner image to a surface of a recording medium.

According to <1>, there is provided an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and a potential variation after formation of an electrostatic latent image is suppressed as compared with a case where an electrostatic capacity of the undercoat layer is less than $1.0 \times 10^{-10}$ F or more than $3.0 \times 10^{-9}$ F.

According to <2>, there is provided an electrophotographic photoreceptor in which a potential variation after the formation of an electrostatic latent image is suppressed, as compared with a case where the relative permittivity of the charge transport layer is less than 3.0 or more than 5.0.

According to <3>, there is provided an electrophotographic photoreceptor in which a potential variation after the formation of an electrostatic latent image is suppressed, as compared with a case where a ratio of a relative permittivity of the charge transport layer to a relative permittivity of the undercoat layer (a relative permittivity of charge transport layer/a relative permittivity of undercoat layer) is less than 0.010 or more than 0.400.

According to <4>, there is provided an electrophotographic photoreceptor in which a potential variation after the formation of an electrostatic latent image is suppressed, as compared with a case where the undercoat layer contains the zinc oxide particles to which the electron-accepting compound is applied in an amount of less than 62% by mass or more than 75% by mass.

According to <5>, there is provided an electrophotographic photoreceptor in which a potential variation after the formation of an electrostatic latent image is suppressed, as compared with a case where the electron-accepting compound is an anthraquinone derivative which does not have three OH groups or does not have two OH groups and one alkoxy group.

According to <6>, there is provided an electrophotographic photoreceptor in which a potential variation after the formation of an electrostatic latent image is suppressed, as compared with a case where the anthraquinone derivative is an alizarin derivative that does not satisfy the configuration represented by Formula (C).

According to <7>, there is provided an electrophotographic photoreceptor in which a potential variation after formation of an electrostatic latent image is suppressed, as compared with a case where the film thickness of the undercoat layer is less than 17 $\mu$m or more than 35 $\mu$m.

According to <8>, there is provided an electrophotographic photoreceptor in which a potential variation after the formation of an electrostatic latent image is suppressed, as compared with a case where each of the polyarylate resin and the polycarbonate resin does not have the constitutional unit including biphenyl.

According to <9> or <10>, there is provided a process cartridge or an image forming apparatus which include an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and a potential variation after formation of an electrostatic latent image is suppressed as compared with a case where an electrostatic capacity of the undercoat layer is less than $1.0 \times 10^{-10}$ F or more than $3.0 \times 10^{-9}$ F.

BRIEF DESCRIPTION OF THE DRAWINGS

Exemplary embodiment(s) of the present invention will be described in detail based on the following figures, wherein:

Fig. 1 is a partial cross-sectional view showing an example of a layer configuration of an electrophotographic photoreceptor according to the present exemplary embodiment;

Fig. 2 is a schematic configuration view showing the configuration of an example of an image forming apparatus according to the present exemplary embodiment; and

Fig. 3 is a schematic configuration view showing a configuration of another example of the image forming apparatus according to the present exemplary embodiment.

DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where a plurality of kinds of particles corresponding to each component are present in a composition, the particle diameter of each component indicates the value of a mixture of the plurality of kinds of particles present in the composition, unless otherwise specified.

In the present disclosure, an alkyl group include all linear, branched, and cyclic shapes unless otherwise specified.

In the present disclosure, a hydrogen atom in an organic group, an aromatic ring, a linking group, an alkyl group, an aryl group, an aralkyl group, an alkoxy group, or an aryloxy group may be substituted with a halogen atom.

<Electrophotographic Photoreceptor>

The electrophotographic photoreceptor (hereinafter, also referred to as a photoreceptor) according to the present exemplary embodiment includes a conductive substrate, an undercoat layer, and a lamination-type photosensitive layer having a charge generation layer and a charge transport layer. The undercoat layer is provided on the conductive substrate. The lamination-type photosensitive layer is provided on the undercoat layer. The charge transport layer contains a charge transport material, and a polyarylate resin containing a dicarboxylic acid unit represented by Formula (A) and a diol unit represented by Formula (B). In addition, the electrostatic capacity of the undercoat layer is $1.0 \times 10^{-10}$ F or more and $3.0 \times 10^{-9}$ F or less.

In the photoreceptor according to the present exemplary embodiment, the charge transport layer is a layer located on the outermost surface layer.

The photoreceptor according to the present exemplary embodiment is a photoreceptor in which the potential variation after the formation of the electrostatic latent image is suppressed due to the above-described configuration. The reason is presumed as follows.

In order to increase the chargeability of the photoreceptor, it is effective to use a resin having a high dielectric constant in the charge transport layer. As one of resins, there is a polyarylate resin including the dicarboxylic acid unit represented by Formula (A) and the diol unit represented by Formula (B).

On the other hand, in a case where the polyarylate resin having a high dielectric constant is used in the charge transport layer, the voltage applied to the charge transport layer decreases in a case where the photoreceptor is charged, and thus a small amount of carriers is likely to remain. In particular, in a case where an image is repeatedly formed for a long period of time, a potential variation occurs after the formation of the electrostatic latent image due to the influence of a small amount of residual carrier. This potential variation causes a defect in image quality, such as fogging (that is, a phenomenon in which a dot-like image is formed in a non-image area) or a ghost (that is, a residual image phenomenon caused by the remaining history of a previous image).

Therefore, in the photoreceptor according to the present exemplary embodiment, the electrostatic capacity of the undercoat layer is increased in order to increase the voltage applied to the charge transport layer.

The voltage applied to each layer in the lamination-type photoreceptor is calculated by the inverse ratio of the

electrostatic capacity of each layer. Therefore, in a case where the electrostatic capacity of the undercoat layer is increased, the voltage applied to the charge transport layer is increased.

In this manner, even in a case where an image is repeatedly formed for a long period of time, the residual amount of carriers in the charge transport layer can be suppressed, and the potential variation after the formation of the electrostatic latent image is suppressed.

For the above reason, it is presumed that the photoreceptor according to the present exemplary embodiment is a photoreceptor in which the potential variation after the formation of the electrostatic latent image is suppressed.

Hereinafter, the photoreceptor according to the present exemplary embodiment will be described in detail.

Fig. 1 is a partial cross-sectional view schematically showing an example of a layer configuration of the photoreceptor according to the present exemplary embodiment. A photoreceptor 10A shown in Fig. 1 includes a lamination-type photosensitive layer. The photoreceptor 10A has a structure in which an undercoat layer 2, a charge generation layer 3, and a charge transport layer 4 are laminated in this order on a conductive substrate 1, and the charge generation layer 3 and the charge transport layer 4 constitute a photosensitive layer 5 (so-called function separation-type photosensitive layer). The photoreceptor 10A may include an interlayer (not shown) between the undercoat layer 2 and the charge generation layer 3.

Hereinafter, each layer of the photoreceptor will be described in detail. However, each layer of the photoreceptor will be described without a reference numeral.

[Conductive Substrate]

Examples of the conductive substrate include metal plates, metal drums, metal belts, or the like, containing a metal (such as aluminum, copper, zinc, chromium, nickel, molybdenum, vanadium, indium, gold, and platinum) or an alloy (such as stainless steel). In addition, examples of the conductive substrate also include paper, a resin film, a belt, or the like, that is obtained by being coated, vapor-deposited, or laminated with a conductive compound (such as a conductive polymer and indium oxide), a metal (such as aluminum, palladium, and gold) or an alloy. Here, the term "conductive" denotes that a volume resistivity is less than $10^{13}$ $\Omega\cdot$cm.

**In** a case where the electrophotographic photoreceptor is used in a laser printer, for example, it is preferable that the surface of the conductive substrate is roughened such that a centerline average roughness Ra thereof is 0.04 $\mu$m or greater and 0.5 $\mu$m or less for the purpose of suppressing interference fringes from occurring in a case of irradiation with laser beams. In a case where incoherent light is used as a light source, roughening of the surface to prevent the interference fringes is not particularly necessary, and the roughening is appropriate for longer life because occurrence of defects due to the roughness of the surface of the conductive substrate is suppressed.

Examples of the roughening method include wet honing performed by suspending an abrasive in water and spraying the suspension to the conductive substrate, centerless grinding performed by pressure-welding the conductive substrate against a rotating grindstone and continuously grinding the conductive substrate, and an anodizing treatment.

Examples of the roughening method also include a method of dispersing conductive or semi-conductive powder in a resin without roughening the surface of the conductive substrate to form a layer on the surface of the conductive substrate, and performing roughening using the particles dispersed in the layer.

The roughening treatment performed by anodization is a treatment of forming an oxide film on the surface of the conductive substrate by carrying out anodization in an electrolytic solution using a conductive substrate made of a metal (for example, aluminum) as an anode. Examples of the electrolytic solution include a sulfuric acid solution and an oxalic acid solution. However, a porous anodized film formed by the anodization is chemically active in a natural state, is easily contaminated, and has a large resistance fluctuation depending on the environment. Therefore, for example, it is preferable that a sealing treatment is performed on the porous anodized film so that the fine pores of the oxide film are closed by volume expansion due to a hydration reaction in pressurized steam or boiling water (a metal salt such as nickel may be added thereto) for a change into a more stable a hydrous oxide.

The film thickness of the anodized film is, for example, preferably 0.3 $\mu$m or greater and 15 $\mu$m or less. In a case where the film thickness is in the above-described range, the barrier properties against injection tend to be exhibited, and an increase in the residual potential due to repeated use tends to be suppressed.

The conductive substrate may be subjected to a treatment with an acidic treatment liquid or a boehmite treatment.

The treatment with an acidic treatment liquid is carried out, for example, as follows. First, an acidic treatment liquid containing phosphoric acid, chromic acid, and hydrofluoric acid is prepared. As a blending proportion of the phosphoric acid, chromic acid, and hydrofluoric acid to the acidic treatment liquid, for example, a concentration of the phosphoric acid may be in a range of 10% by mass or more and 11% by mass or less, a concentration of the chromic acid may be in a range of 3% by mass or more and 5% by mass or less, and a concentration of the hydrofluoric acid may be in a range of 0.5% by mass or more and 2% by mass or less, and a concentration of all of these acids may be in a range of 13.5% by mass or more and 18% by mass or less. A treatment temperature is, for example, preferably 42°C or higher and 48°C or lower. The film thickness of the coating film is, for example, preferably 0.3 $\mu$m or greater and 15 $\mu$m or less.

The boehmite treatment is carried out, for example, by dipping the conductive substrate in pure water at 90°C or higher and 100°C or lower for 5 minutes to 60 minutes or by bringing the conductive substrate into contact with heated steam at 90°C or higher and 120°C or lower for 5 minutes to 60 minutes. A film thickness of the coating film is, for example, preferably 0.1 μm or more and 5 μm or less. This coating film may be further subjected to the anodizing treatment using an electrolytic solution having low film solubility, such as adipic acid, boric acid, a borate, a phosphate, a phthalate, a maleate, a benzoate, a tartrate, or a citrate.

(Undercoat Layer)

The undercoat layer is, for example, a layer containing inorganic particles and a binder resin.
Examples of the inorganic particles include inorganic particles having a powder resistance (volume resistivity) of $10^2$ Ω·cm or more and $10^{11}$ Ω·cm or less.
Among these, as the inorganic particles having the above-described resistance value, for example, metal oxide particles such as tin oxide particles, titanium oxide particles, zinc oxide particles, and zirconium oxide particles may be used, and zinc oxide particles are particularly preferable.
A specific surface area of the inorganic particles, measured by a BET method, may be, for example, 10 $m^2/g$ or more.
The volume average particle diameter of the inorganic particles may be, for example, 50 nm or greater and 2,000 nm or less (for example, preferably 60 nm or greater and 1,000 nm or less).
The content of the inorganic particles is, for example, preferably 10% by mass or greater and 80% by mass or less and more preferably 40% by mass or greater and 80% by mass or less with respect to the amount of the binder resin.
The inorganic particles may be subjected to a surface treatment. As the inorganic particles, inorganic particles subjected to different surface treatments or inorganic particles having different particle diameters may be used in the form of a mixture of two or more kinds thereof.
Examples of the surface treatment agent include a silane coupling agent, a titanate-based coupling agent, an aluminum-based coupling agent, and a surfactant. In particular, for example, a silane coupling agent is preferable, and a silane coupling agent containing an amino group is more preferable.
Examples of the silane coupling agent containing an amino group include 3-aminopropyltriethoxysilane, N-2-(aminoethyl)-3-aminopropyltrimethoxysilane, N-2-(aminoethyl)-3-aminopropylmethyldimethoxysilane, and N,N-bis(2-hydroxyethyl)-3-aminopropyltriethoxysilane, but are not limited thereto.
The silane coupling agent may be used in the form of a mixture of two or more kinds thereof. For example, the silane coupling agent having an amino group and other silane coupling agents may be used in combination. Examples of other silane coupling agents include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl) -3-aminopropyltriethoxysilane, and 3-chloropropyltrimethoxysilane, but are not limited thereto.
The surface treatment method using a surface treatment agent may be any method as long as the method is a known method, and any of a dry method or a wet method may be used.
The treatment amount of the surface treatment agent is, for example, preferably 0.5% by mass or greater and 10% by mass or less with respect to the amount of the inorganic particles.
Here, in the undercoat layer, from the viewpoint of setting the electrostatic capacity to be in the above-described range and suppressing the potential variation after the electrostatic latent image formation, for example, zinc oxide particles are preferable as the inorganic particles. In particular, as the inorganic particles, for example, zinc oxide particles to which an electron-accepting compound is imparted are preferable.

-Zinc Oxide Particles to which Electron-Accepting Compound is Imparted-

The zinc oxide particles to which the electron-accepting compound is applied are, for example, preferably contained in an amount of 62% by mass or more and 75% by mass or less and more preferably contained in an amount of 65% by mass or more and 73% by mass or less with respect to the undercoat layer.
In a case where the content of the zinc oxide particles to which the electron-accepting compound is applied is 62% by mass or more, the electrostatic capacity of the undercoat layer is increased, and the voltage applied to the charge transport layer is likely to increase. As a result, the potential variation after the formation of the electrostatic latent image is easily suppressed.
In a case where the content of the zinc oxide particles to which the electron-accepting compound is applied is 75% by mass or less, it is suppressed that the electrostatic capacity of the undercoat layer is excessively increased. As a result, the potential variation after the formation of the electrostatic latent image is easily suppressed.

In a case where the content of the zinc oxide particles to which the electron-accepting compound is applied satisfies the above-described range, in the photoreceptor, the dielectric constant of the undercoat layer increases and the voltage applied to the charge transport layer increases, so that the potential variation after the electrostatic latent image formation is suppressed.

-Electron-Accepting Compound-

The electron-accepting compound is, for example, preferably an anthraquinone derivative having three OH groups or having two OH groups and one alkoxy group.

The anthraquinone derivative is, for example, preferably an alizarin derivative represented by Formula (C).

In a case where the above-described compound is applied as the electron-accepting compound, the electrostatic capacity of the undercoat layer increases, and the voltage applied to the charge transport layer increases. As a result, the potential variation after the formation of the electrostatic latent image is suppressed.

The reason is presumed as follows. In a case where the anthraquinone derivative and the alizarin derivative represented by Formula (C) are added in the same amount to the charge transport layer, the mass-based and volume-based proportions of the anthraquinone derivative and the alizarin derivative in the undercoat layer are higher as compared with anthraquinone or alizarin due to the difference in molecular weight. As a result, the anthraquinone derivative and the alizarin derivative represented by Formula (C) form a charge transfer complex with the zinc oxide particles over a wider range. Therefore, it is presumed that the electrostatic capacity of the undercoat layer increases.

FORMULA (C)

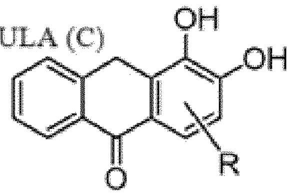

In Formula (C), R represents a hydroxyl group or an alkoxy group having 1 or more and 10 or less of carbon atoms.

In Formula (C), the number of carbon atoms in the alkoxy group represented by R is, for example, preferably 1 or more and 4 or less, and more preferably 1 or 2.

Specific examples of the electron-accepting compound include purpurin and the following compound (A). Among these, as the electron-accepting compound, for example, purpurin or the following compound (A) is preferable.

In addition, as the electron-accepting compound, quinizarin, anthralin, or a derivative thereof may also be used.

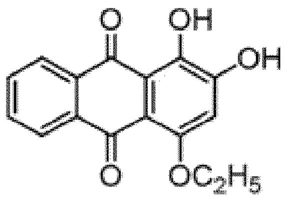

COMPOUND (A)

Examples of the method of imparting the electron-accepting compound to the inorganic particles (that is, the method of attaching the electron-accepting compound to the surface of the inorganic particles) include a dry method and a wet method.

The dry method is, for example, a method of attaching the electron-accepting compound to the surface of the inorganic particles by adding the electron-accepting compound dropwise to the inorganic particles directly or by dissolving the electron-accepting compound in an organic solvent while stirring the inorganic particles with a mixer having a large shearing force and spraying the mixture together with dry air or nitrogen gas. For example, the dropwise addition or spraying of the electron-accepting compound may be performed at a temperature equal to or lower than a boiling point of the solvent. After the dropwise addition or spraying of the electron-accepting compound, the mixture may be further baked at 100°C or higher. The baking is not particularly limited as long as the temperature and the time are adjusted such that the electrophotographic characteristics can be obtained.

The wet method is, for example, a method of attaching the electron-accepting compound to the surface of the inorganic particles by adding the electron-accepting compound to inorganic particles while dispersing the inorganic particles in a solvent by performing using a stirrer, an ultrasonic disperser, a sand mill, an attritor, or a ball mill, stirring or dispersing the mixture, and removing the solvent. The solvent removing method is carried out by, for example, filtration or

distillation so that the solvent is distilled off. After removal of the solvent, the mixture may be further baked at 100°C or higher. The baking is not particularly limited as long as the temperature and the time are adjusted such that electrophotographic characteristics can be obtained. In the wet method, the moisture contained in the inorganic particles may be removed before the electron-accepting compound is added, and examples thereof include a method of removing the moisture while stirring and heating the moisture in a solvent and a method of removing the moisture by azeotropically boiling the moisture with a solvent.

The electron-accepting compound may be attached before or after the inorganic particles are subjected to the surface treatment with the surface treatment agent or simultaneously with the surface treatment with the surface treatment agent.

The content (that is, the imparting amount) of the electron-accepting compound may be, for example, 0.01% by mass or more and 20% by mass or less, and is preferably 0.01% by mass or more and 10% by mass or less with respect to the inorganic particles.

Examples of the binder resin used for the undercoat layer include known polymer compounds such as an acetal resin (such as polyvinyl butyral), a polyvinyl alcohol resin, a polyvinyl acetal resin, a casein resin, a polyamide resin, a cellulose resin, gelatin, a polyurethane resin, a polyester resin, an unsaturated polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a urea resin, a phenol resin, a phenol-formaldehyde resin, a melamine resin, a urethane resin, an alkyd resin, and an epoxy resin, a zirconium chelate compound, a titanium chelate compound, an aluminum chelate compound, a titanium alkoxide compound, an organic titanium compound, and known materials such as a silane coupling agent.

Examples of the binder resin used for the undercoat layer include a charge-transporting resin containing a charge-transporting group, and a conductive resin (such as polyaniline).

Among these, as the binder resin used for the undercoat layer, for example, a resin insoluble in a coating solvent of the upper layer is preferable, and a resin obtained by reaction between a curing agent and at least one resin selected from the group consisting of a thermosetting resin such as a urea resin, a phenol resin, a phenol-formaldehyde resin, a melamine resin, a urethane resin, an unsaturated polyester resin, an alkyd resin, or an epoxy resin; a polyamide resin, a polyester resin, a polyether resin, a methacrylic resin, an acrylic resin, a polyvinyl alcohol resin, and a polyvinyl acetal resin is particularly preferable.

In a case where these binder resins are used in combination of two or more kinds thereof, the mixing ratio thereof is set as necessary.

The undercoat layer may contain various additives for improving the electrical properties, the environmental stability, and the image quality.

Examples of the additive include known materials such as an electron-transporting pigment such as a polycyclic condensed pigment or an azo-based pigment, a zirconium chelate compound, a titanium chelate compound, an aluminum chelate compound, a titanium alkoxide compound, an organic titanium compound, and a silane coupling agent. The silane coupling agent is used for a surface treatment of the inorganic particles as described above, but may be further added to the undercoat layer as an additive.

Examples of the silane coupling agent serving as an additive include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane.

Examples of the zirconium chelate compound include zirconium butoxide, ethyl zirconium acetoacetate, zirconium triethanolamine, acetylacetonate zirconium butoxide, ethyl zirconium butoxide acetoacetate, zirconium acetate, zirconium oxalate, zirconium lactate, zirconium phosphonate, zirconium octanoate, zirconium naphthenate, zirconium laurate, zirconium stearate, zirconium isostearate, zirconium butoxide methacrylate, stearate zirconium butoxide, and isostearate zirconium butoxide.

Examples of the titanium chelate compound include tetraisopropyl titanate, tetranormal butyl titanate, a butyl titanate dimer, tetra(2-ethylhexyl) titanate, titanium acetylacetonate, polytitanium acetylacetonate, titanium octylene glycolate, titanium lactate ammonium salt, titanium lactate, titanium lactate ethyl ester, titanium triethanol aminate, and polyhydroxy titanium stearate.

Examples of the aluminum chelate compound include aluminum isopropylate, monobutoxyaluminum diisopropylate, aluminum butyrate, diethylacetoacetate aluminum diisopropylate, and aluminum tris(ethylacetoacetate).

These additives may be used alone or in the form of a mixture or a polycondensate of a plurality of compounds.

-Electrostatic Capacity of Undercoat Layer-

The electrostatic capacity of the undercoat layer is $1.0 \times 10^{-10}$ F or more and $3.0 \times 10^{-9}$ F or less. The electrostatic

capacity of the undercoat layer is, for example, more preferably 2.5 × $10^{-10}$ F or more and 2.0 × $10^{-9}$ F or less, and still more preferably 5.3 × $10^{-10}$ F or more and 1.5 × $10^{-9}$ F or less.

In a case where the electrostatic capacity of the undercoat layer is less than 1.0 × $10^{-10}$ F, the voltage applied to the charge transport layer is weakened, and the potential variation after the electrostatic latent image formation is deteriorated.

In a case where the electrostatic capacity of the undercoat layer exceeds 3.0 × $10^{-9}$ F, the voltage applied to the undercoat layer is excessively low, and the potential variation after the formation of the electrostatic latent image is further deteriorated.

Examples of a method of setting the electrostatic capacity of the undercoat layer within the above-described range include a method of using the above-described alizarin derivative represented by Formula (C) as the electron-accepting compound and adjusting the film thickness of the undercoat layer to 17 μm or more and 35 μm or less.

The charge transport layer and the charge generation layer are removed with a solvent, and the electrostatic capacity of the undercoat layer is measured in a state where the undercoat layer single layer is attached to the base material. In this state, an Au electrode having a radius of 3 mm is formed on the surface of the undercoat layer, and the electrostatic capacity at an alternating current frequency of 1 Hz is measured with an impedance analyzer in a state where a direct current voltage (DC voltage) of 10 V and an alternating current voltage (AC voltage) of 2 V are applied from the conductive substrate material and the Au electrode to the undercoat layer.

-Film Thickness of Undercoat Layer-

The film thickness of the undercoat layer is set to be 17 μm or more and 35 μm or less, for example, more preferably in a range of 18 μm or more and 26 μm or less.

In a case where the film thickness of the undercoat layer is 17 μm or more, the electrostatic capacity of the undercoat layer is increased, the voltage applied to the charge transport layer is increased, and the potential variation after the formation of the electrostatic latent image is easily suppressed.

In a case where the film thickness of the undercoat layer is 35 μm or less, the excessive decrease in the electrostatic capacity of the undercoat layer is suppressed, the excessive decrease in the voltage applied to the charge transport layer can suppressed, and the potential variation after the formation of the electrostatic latent image is easily suppressed.

In the photoreceptor, in a case where the film thickness of the undercoat layer satisfies the above-described configuration, the electrostatic capacity of the undercoat layer increases, and the voltage applied to the charge transport layer increases. As a result, the potential variation after the formation of the electrostatic latent image is suppressed.

The undercoat layer may have, for example, a Vickers hardness of 35 or greater.

For example, the surface roughness (ten-point average roughness) of the undercoat layer may be adjusted to 1/2 from 1/(4n) (n is a refractive index of an upper layer) of a laser wavelength λ for exposure to be used to suppress moire fringes.

Resin particles or the like may be added to the undercoat layer to adjust the surface roughness. Examples of the resin particles include silicone resin particles and crosslinked polymethyl methacrylate resin particles. In addition, the surface of the undercoat layer may be polished to adjust the surface roughness. Examples of the polishing method include buff polishing, a sandblast treatment, wet honing, and a grinding treatment.

The formation of the undercoat layer is not particularly limited, and a known forming method is used. For example, a coating film of a coating solution for forming the undercoat layer, in which the above-described components are added to a solvent, is formed, and the coating film is dried and then heated as necessary.

Examples of the solvent for preparing the coating solution for forming an undercoat layer include known organic solvents such as an alcohol-based solvent, an aromatic hydrocarbon solvent, a halogenated hydrocarbon solvent, a ketone-based solvent, a ketone alcohol-based solvent, an ether-based solvent, and an ester-based solvent.

Specific examples of the solvent include typical organic solvents such as methanol, ethanol, n-propanol, iso-propanol, n-butanol, benzyl alcohol, methyl cellosolve, ethyl cellosolve, acetone, methyl ethyl ketone, cyclohexanone, methyl acetate, ethyl acetate, n-butyl acetate, dioxane, tetrahydrofuran, methylene chloride, chloroform, chlorobenzene, and toluene.

Examples of the method of dispersing the inorganic particles in a case of preparing the coating solution for forming an undercoat layer include known methods such as a roll mill, a ball mill, a vibration ball mill, an attritor, a sand mill, a colloid mill, and a paint shaker.

Examples of the method of coating the conductive substrate with the coating solution for forming an undercoat layer include typical coating methods such as a blade coating method, a wire bar coating method, a spray coating method, a dip coating method, a bead coating method, an air knife coating method, and a curtain coating method.

(Interlayer)

Although not shown in the drawings, an interlayer may be further provided between the undercoat layer and the photosensitive layer.

The interlayer is, for example, a layer containing a resin. Examples of the resin used for the interlayer include polymer compounds such as an acetal resin (for example, polyvinyl butyral or the like), a polyvinyl alcohol resin, a polyvinyl acetal resin, a casein resin, a polyamide resin, a cellulose resin, gelatin, a polyurethane resin, a polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a phenol-formaldehyde resin, and a melamine resin.

The interlayer may be a layer containing an organometallic compound. Examples of the organometallic compound used for the interlayer include organometallic compounds containing a metal atom such as zirconium, titanium, aluminum, manganese, and silicon.

The compounds used for the interlayer may be used alone or in the form of a mixture or a polycondensate of a plurality of compounds.

Among these, it is preferable that the interlayer is, for example, a layer containing an organometallic compound having a zirconium atom or a silicon atom.

The formation of the interlayer is not particularly limited, and a known forming method is used. For example, a coating film of a coating solution for forming the interlayer, in which the above-described components are added to a solvent, is formed, and the coating film is dried and then heated as necessary.

Examples of the coating method of forming the interlayer include typical methods such as a dip coating method, a push-up coating method, a wire bar coating method, a spray coating method, a blade coating method, an air knife coating method, and a curtain coating method.

A film thickness of the interlayer is set to, for example, preferably in a range of 0.1 μm or more and 3 μm or less. The interlayer may be used as the undercoat layer.

(Charge Generation Layer)

A charge generation layer is, for example, a layer containing a charge generation material and a binder resin. In addition, the charge generation layer may be a deposition layer of the charge generation material. For example, the deposition layer of the charge generation material is preferable in a case where an incoherent light source such as a light emitting diode (LED) and an organic electro-luminescence (EL) image array is used.

Examples of the charge generation material include an azo pigment such as bisazo or trisazo; a fused ring aromatic pigment such as dibromoanthanthrone; a perylene pigment; a pyrrolopyrrole pigment; a phthalocyanine pigment; zinc oxide; and trigonal selenium.

Among these, for example, a metal phthalocyanine pigment or a metal-free phthalocyanine pigment is preferably used as the charge generation material in order to deal with laser exposure in a near infrared region. Specifically, for example, hydroxygallium phthalocyanine, chlorogallium phthalocyanine, dichloro-tin phthalocyanine, and titanyl phthalocyanine are more preferable.

On the other hand, for example, a fused ring aromatic pigment such as dibromoanthanthrone, a thioindigo-based pigment, a porphyrazine compound, zinc oxide, trigonal selenium, or a bisazo pigment is preferable as the charge generation material in order to deal with laser exposure in a near ultraviolet region.

The above-described charge generation material may be used even in a case where a non-coherent light source such as an LED having a central wavelength of light emission in a range of 450 nm or more and 780 nm or less and an organic EL image array is used.

In a case where an n-type semiconductor such as a fused ring aromatic pigment, a perylene pigment, and an azo pigment is used as the charge generation material, a dark current is unlikely to be generated, and image defects referred to as black spots can be suppressed even in a case in which a thin film is used.

The n-type is determined by the polarity of the flowing photocurrent using a typically used time-of-flight method, and a material in which electrons more easily flow as carriers than positive holes is determined as the n-type.

The binder resin used for the charge generation layer is selected from a wide range of insulating resins, and the binder resin may be selected from organic photoconductive polymers such as poly-N-vinylcarbazole, polyvinyl anthracene, polyvinylpyrene, and polysilane.

Examples of the binder resin include a polyvinyl butyral resin, a polyarylate resin (polycondensate of bisphenols and aromatic divalent carboxylic acid, or the like), a polycarbonate resin, a polyester resin, a phenoxy resin, a vinyl chloride-vinyl acetate copolymer, a polyamide resin, an acrylic resin, a polyacrylamide resin, a polyvinylpyridine resin, a cellulose resin, a urethane resin, an epoxy resin, casein, a polyvinyl alcohol resin, and a polyvinylpyrrolidone resin. Here, the term "insulating" means that a volume resistivity is $10^{13}$ Ω·cm or more.

These binder resins are used alone or in the form of a mixture of two or more kinds thereof.

A blending ratio between the charge generation material and the binder resin is, for example, preferably in a range of 10: 1 to 1:10 in terms of mass ratio.

The charge generation layer may also contain other known additives.

The formation of the charge generation layer is not particularly limited, and a known forming method is used. For example, a coating film of a coating solution for forming the charge generation layer, in which the above-described components are added to a solvent, is formed, and the coating film is dried and then heated as necessary. The charge generation layer may be formed by a vapor deposition of the charge generation material. For example, the formation of the charge generation layer by the vapor deposition is particularly preferable in a case where the fused ring aromatic pigment or the perylene pigment is used as the charge generation material.

Examples of the solvent for preparing the coating solution for forming the charge generation layer include methanol, ethanol, n-propanol, n-butanol, benzyl alcohol, methyl cellosolve, ethyl cellosolve, acetone, methyl ethyl ketone, cyclohexanone, methyl acetate, n-butyl acetate, dioxane, tetrahydrofuran, methylene chloride, chloroform, chlorobenzene, and toluene. These solvents are used alone or in the form of a mixture of two or more kinds thereof.

As a method of dispersing particles (for example, the charge generation material) in the coating solution for forming the charge generation layer, for example, a media disperser such as a ball mill, a vibration ball mill, an attritor, a sand mill, and a horizontal sand mill, or a medialess disperser such as a stirrer, an ultrasonic disperser, a roll mill, and a high-pressure homogenizer is used. Examples of the high-pressure homogenizer include a collision type homogenizer in which a dispersion liquid is dispersed by a liquid-liquid collision or a liquid-wall collision in a high-pressure state, and a penetration type homogenizer in which a dispersion liquid is dispersed by penetrating the liquid through a fine flow path in a high-pressure state.

During the dispersion, it is effective to set an average particle diameter of the charge generation material in the coating solution for forming the charge generation layer to 0.5 μm or less, for example, preferably 0.3 μm or less and more preferably 0.15 μm or less.

Examples of the method of coating the undercoat layer (or the interlayer) with the coating solution for forming a charge generation layer include typical methods such as a blade coating method, a wire bar coating method, a spray coating method, a dip coating method, a bead coating method, an air knife coating method, and a curtain coating method.

A film thickness of the charge generation layer is set to, for example, preferably in a range of 0.1 μm or more and 5.0 μm or less and more preferably in a range of 0.2 μm or more and 2.0 μm or less.

[Charge Transport Layer]

The charge transport layer is a layer containing a binder resin and a charge transport material.

(Charge Transport Material)

Examples of the charge transport material include a quinone-based compound such as p-benzoquinone, chloranil, bromanil, or anthraquinone; a tetracyanoquinodimethane-based compound; a fluorenone compound such as 2,4,7-trinitrofluorenone; a xanthone compound; a benzophenone-based compound; a cyanovinyl-based compound; and an electron-transporting compound such as an ethylene-based compound. Examples of the charge transport material also include a positive hole-transporting compound such as a triarylamine-based compound, a benzidine-based compound, an aryl alkane-based compound, an aryl-substituted ethylene-based compound, a stilbene-based compound, an anthracene-based compound, and a hydrazone-based compound. These charge transport materials are used alone or in combination of two or more kinds thereof, but are not limited thereto.

Examples of the polymer charge transport material include known chemical substances having charge transport properties, such as poly-N-vinylcarbazole and polysilane. For example, a polyester-based polymer charge transport material is preferable. The polymer charge transport material may be used alone or in combination with a binder resin.

Examples of the charge transport material or the polymer charge transport material include a polycyclic aromatic compound, an aromatic nitro compound, an aromatic amine compound, a heterocyclic compound, a hydrazone compound, a styryl compound, an enamine compound, a benzidine compound, a triarylamine compound (particularly, a triphenylamine compound), a diamine compound, an oxadiazole compound, a carbazole compound, an organic polysilane compound, a pyrazoline compound, an indole compound, an oxazole compound, an isoxazole compound, a thiazole compound, a thiadiazole compound, an imidazole compound, a pyrazole compound, a triazole compound, a cyano compound, a benzofuran compound, an aniline compound, a butadiene compound, and a resin containing a group derived from these substances. Specific examples thereof include compounds described in paragraphs 0078 to 0080 of JP2021-117377A, paragraphs 0046 to 0048 of JP2019-035900A, paragraphs 0052 and 0053 of JP2019-012141A, paragraphs 0122 to 0134 of JP2021-071565A, paragraphs 0101 to 0110 of JP2021-015223A, paragraph 0116 of JP2013-097300A, paragraphs 0309 to 0316 of WO2019/070003A, paragraphs 0103 to 0107 of JP2018-159087A, and paragraphs 0102 to 0113 of JP2021-148818A.

From the viewpoint of the charge mobility, for example, it is preferable that the charge transport material contains at least one selected from the group consisting of a chemical substance (C1) represented by Formula (C1), a chemical substance (C2) represented by Formula (C2), a chemical substance (C3) represented by Formula (C3), and a chemical substance (C4) represented by Formula (C4).

FORMULA (C1)

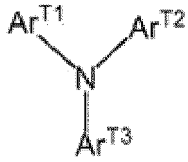

In Formula (C1), $Ar^{T1}$, $Ar^{T2}$, and $Ar^{T3}$ are each independently an aryl group, $-C_6H_4-C(R^{T4})=C(R^{T5})(R^{T6})$, or $-C_6H_4-CH=CH-CH=C(R^{T7})(R^{T8})$. $R^{T4}$, $R^{T5}$, $R^{T6}$, $R^{T7}$, and $R^{T8}$ are each independently a hydrogen atom, an alkyl group, or an aryl group. In a case where $R^{T5}$ and $R^{T6}$ are aryl groups, the aryl groups may be linked through a divalent group of $-C(R^{51})(R^{52})-$ and/or $-C(R^{61})=C(R^{62})-$. $R^{51}$, $R^{52}$, $R^{61}$, and $R^{62}$ are each independently a hydrogen atom or an alkyl group having 1 or more and 3 or less carbon atoms.

The group in Formula (C1) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

From the viewpoint of the charge mobility, as the chemical substance (C1), for example, a chemical substance containing at least one of an aryl group or $-C_6H_4-CH=CH-CH=C(R^{T7})(R^{T8})$ is preferable, and a chemical substance (C'1) represented by Formula (C' 1) is more preferable.

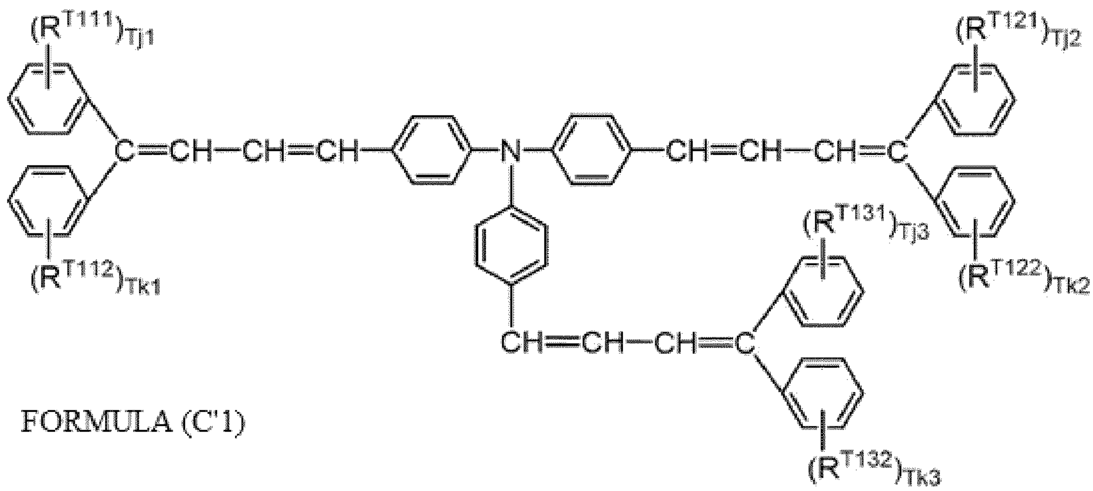

FORMULA (C'1)

In Formula (C'1), $R^{T111}$, $R^{T112}$, $R^{T121}$, $R^{T122}$, $R^{T131}$, and $R^{T132}$ are each independently a hydrogen atom, a halogen atom, an alkyl group (for example, preferably an alkyl group having 1 or more and 3 or less carbon atoms), an alkoxy group (for example, preferably an alkoxy group having 1 or more and 3 or less carbon atoms), a phenyl group, or a phenoxy group. Tj1, Tj2, Tj3, Tk1, Tk2, and Tk3 are each independently 0, 1, or 2.

FORMULA (C2)

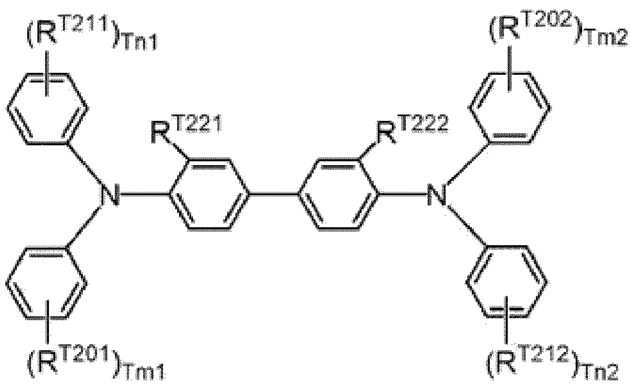

In Formula (C2), $R^{T201}$, $R^{T202}$, $R^{T211}$, and $R^{T212}$ are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C($R^{T21}$)=C($R^{T22}$)($R^{T23}$), or -CH=CH-CH=C($R^{T24}$)($R^{T25}$). $R^{T21}$, $R^{T22}$, $R^{T23}$, $R^{T24}$, and $R^{T25}$ are each independently a hydrogen atom, an alkyl group, or an aryl group. $R^{T221}$ and $R^{T222}$ are each independently a hydrogen atom, a halogen atom, an alkyl group having 1 or more and 5 or less carbon atoms, or an alkoxy group having 1 or more and 5 or less carbon atoms. Tm1, Tm2, Tn1, and Tn2 are each independently 0, 1, or 2.

The group in Formula (C2) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

From the viewpoint of the charge mobility, as the chemical substance (C2), for example, a chemical substance containing at least one of an alkyl group, an aryl group, or -CH=CH-CH=C($R^{T24}$)($R^{T25}$) is preferable, and a chemical substance containing two of an alkyl group, an aryl group, or -CH=CH-CH=C($R^{T24}$)($R^{T25}$) is more preferable.

FORMULA (C3)

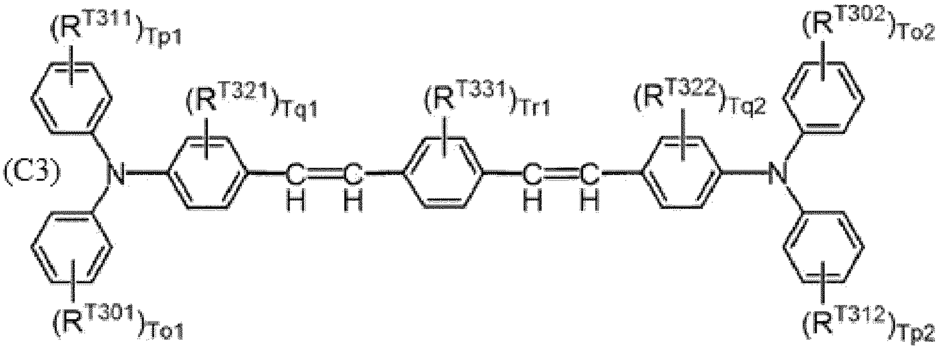

In Formula (C3), $R^{T301}$, $R^{T302}$, $R^{T311}$, and $R^{T312}$ are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C($R^{T31}$)=C($R^{T32}$)($R^{T33}$), or -CH=CH-CH=C($R^{T34}$)($R^{T35}$). $R^{T31}$, $R^{T32}$, $R^{T33}$, $R^{T34}$, and $R^{T35}$ are each independently a hydrogen atom, an alkyl group, or an aryl group. $R^{T321}$, $R^{T322}$, and $R^{T331}$ are each independently a hydrogen atom, a halogen atom, an alkyl group having 1 or more and 5 or less carbon atoms, or an alkoxy group having 1 or more and 5 or less carbon atoms. To1, To2, Tp1, Tp2, Tq1, Tq2, and Tr1 are each independently 0, 1, or 2.

The group in Formula (C3) may be substituted with a halogen atom, an alkyl group having 1 or more and 5 or less carbon atoms, an alkoxy group having 1 or more and 5 or less carbon atoms, or a substituted amino group substituted with an alkyl group having 1 or more and 3 or less carbon atoms.

FORMULA (C4)

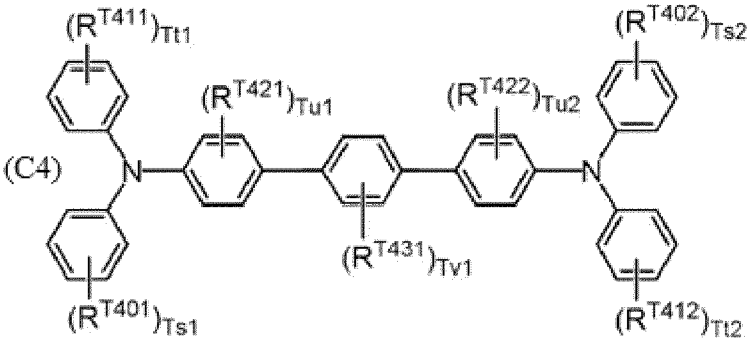

In Formula (C4), $R^{T401}$, $R^{T402}$, $R^{T411}$, and $R^{T412}$ are each independently a halogen atom, an alkyl group having 1 or more and 5 or less carbon atoms, an alkoxy group having 1 or more and 5 or less carbon atoms, an amino group substituted with an alkyl group having 1 or 2 carbon atoms, an aryl group, -C($R^{T41}$)=C($R^{T42}$)($R^{T43}$), or -CH=CH-CH=C($R^{T44}$)($R^{T45}$). $R^{T41}$, $R^{T42}$, $R^{T43}$, $R^{T44}$, and $R^{T45}$ are each independently a hydrogen atom, an alkyl group, or an aryl group. $R^{T421}$, $R^{T422}$, and $R^{T431}$ are each independently a hydrogen atom, a halogen atom, an alkyl group having 1 or more and 5 or less carbon atoms, or an alkoxy group having 1 or more and 5 or less carbon atoms. Ts1, Ts2, Tt1, Tt2, Tu1, Tu2, and Tv1 are each independently 0, 1, or 2.

The group in Formula (C4) may be substituted with a halogen atom, an alkyl group having 1 or more and 5 or less carbon atoms, an alkoxy group having 1 or more and 5 or less carbon atoms, or a substituted amino group substituted with

an alkyl group having 1 or more and 3 or less carbon atoms.

The content of the charge transport material contained in the charge transport layer is, for example, preferably 20% by mass or greater and 70% by mass or less with respect to the total mass of the charge transport layer.

[Binder Resin]

The binder resin used in the charge transport layer includes a dicarboxylic acid unit represented by Formula (A) (hereinafter, referred to as a "dicarboxylic acid unit (A)") and a diol unit represented by Formula (B) (hereinafter, referred to as a "diol unit (B)"). In the present disclosure, the polyarylate resin is also referred to as a polyarylate resin (PA).

The dicarboxylic acid unit (A) is a constitutional unit represented by Formula (A).

FORMULA (A)

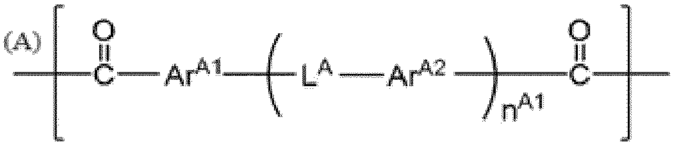

In Formula (A), $Ar^{A1}$ and $Ar^{A2}$ are each independently an aromatic ring which may have a substituent, $L^A$ is a single bond or a divalent linking group, and $n^{A1}$ is 0, 1, or 2.

The aromatic ring as $Ar^{A1}$ may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as $Ar^{A1}$ may be substituted with an alkyl group, an aryl group, an aralkyl group, an alkoxy group, an aryloxy group, a halogen atom, or the like. As the substituent in a case where the aromatic ring as $Ar^{A1}$ is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as $Ar^{A2}$ may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as $Ar^{A2}$ may be substituted with an alkyl group, an aryl group, an aralkyl group, an alkoxy group, an aryloxy group, a halogen atom, or the like. As the substituent in a case where the aromatic ring as $Ar^{A2}$ is substituted, for example, an alkyl group having 1 or more and 10 or less carbon atoms, an aryl group having 6 or more and 12 or less carbon atoms, or an alkoxy group having 1 or more and 6 or less carbon atoms is preferable.

In a case where $L^A$ is a divalent linking group, examples of the divalent linking group include an oxygen atom, a sulfur atom, and $-C(Ra^1)(Ra^2)-$. Here, $Ra^1$ and $Ra^2$ are each independently a hydrogen atom, an alkyl group having 1 or more and 10 or less carbon atoms, an aryl group having 6 or more and 12 or less carbon atoms, or an aralkyl group having 7 or more and 20 or less carbon atoms, and $Ra^1$ and $Ra^2$ may be bonded to each other to form a cyclic alkyl group.

The alkyl group having 1 or more and 10 or less carbon atoms, as $Ra^1$ and $Ra^2$, may be linear, branched, or cyclic. The number of carbon atoms of the alkyl group is, for example, preferably 1 or more and 6 or less, more preferably 1 or more and 4 or less, and still more preferably 1 or 2.

The aryl group having 6 or more and 12 or less carbon atoms, as $Ra^1$ and $Ra^2$, may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as $Ra^1$ and $Ra^2$, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as $Ra^1$ and $Ra^2$, may be a monocycle or a polycycle. The number of carbon atoms of the aryl group is, for example, preferably 6 or more and 10 or less and more preferably 6.

The dicarboxylic acid unit (A) preferably includes, for example, at least one selected from the group consisting of a dicarboxylic acid unit (A1) represented by Formula (A1), a dicarboxylic acid unit (A2) represented by Formula (A2), a dicarboxylic acid unit (A3) represented by Formula (A3), a dicarboxylic acid unit (A4) represented by Formula (A4), and a dicarboxylic acid unit (A5) represented by Formula (A5). The dicarboxylic acid unit (A) includes, for example, more preferably at least one selected from the group consisting of a dicarboxylic acid unit (A2), a dicarboxylic acid unit (A3), and a dicarboxylic acid unit (A4) and still more preferably a dicarboxylic acid unit (A2).

FORMULA (A1)

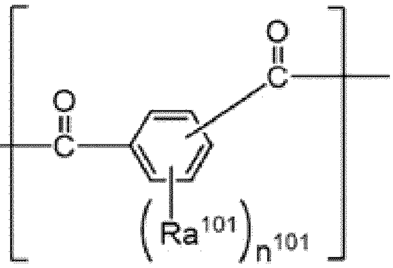

In Formula (A1), $n^{101}$ is an integer of 0 or greater and 4 or less, and $n^{101}$ pieces of $Ra^{101}$'s are each independently an alkyl group having 1 or more and 10 or less carbon atoms, an aryl group having 6 or more and 12 or less carbon atoms, or an alkoxy group having 1 or more and 6 or less carbon atoms.

$n^{101}$ is, for example, preferably 0, 1, or 2, more preferably 0 or 1, and still more preferably 0.

FORMULA (A2)

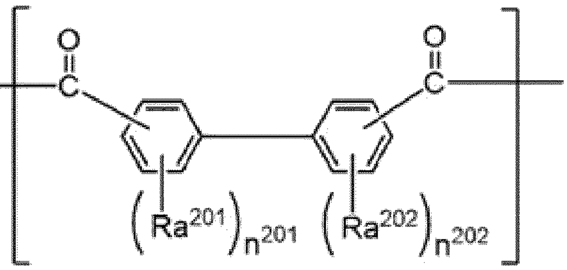

In Formula (A2), $n^{201}$ and $n^{202}$ are each independently an integer of 0 or greater and 4 or less, and $n^{201}$ pieces of $Ra^{201}$'s and $n^{202}$ pieces of $Ra^{202}$'s are each independently an alkyl group having 1 or more and 10 or less carbon atoms, an aryl group having 6 or more and 12 or less carbon atoms, or an alkoxy group having 1 or more and 6 or less carbon atoms.

$n^{201}$ represents, for example, preferably 0, 1, or 2, more preferably 0 or 1, and still more preferably 0.

$n^{202}$ represents, for example, preferably 0, 1, or 2, more preferably 0 or 1, and still more preferably 0.

FORMULA (A3)

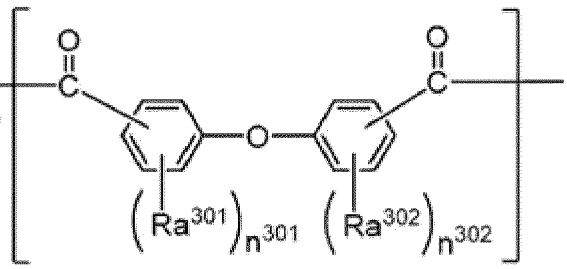

In Formula (A3), $n^{301}$ and $n^{302}$ are each independently an integer of 0 or greater and 4 or less, and $n^{301}$ pieces of $Ra^{301}$'s and $n^{302}$ pieces of $Ra^{302}$'s are each independently an alkyl group having 1 or more and 10 or less carbon atoms, an aryl group having 6 or more and 12 or less carbon atoms, or an alkoxy group having 1 or more and 6 or less carbon atoms.

$n^{301}$ is, for example, preferably 0, 1, or 2, more preferably 0 or 1, and still more preferably 0.

$n^{302}$ is, for example, preferably 0, 1, or 2, more preferably 0 or 1, and still more preferably 0.

FORMULA (A4)

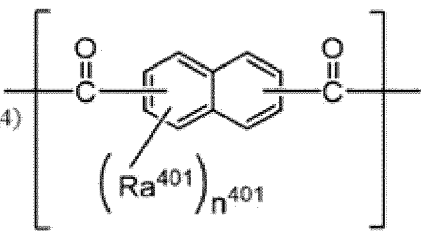

In Formula (A4), $n^{401}$ is an integer of 0 or greater and 6 or less, and $n^{401}$ pieces of $Ra^{401}$'s are each independently an alkyl group having 1 or more and 10 or less carbon atoms, an aryl group having 6 or more and 12 or less carbon atoms, or an alkoxy group having 1 or more and 6 or less carbon atoms.

$n^{401}$ represents, for example, preferably an integer of 0 or greater and 4 or less, more preferably 0, 1, or 2, and still more preferably 0.

FORMULA (A5)

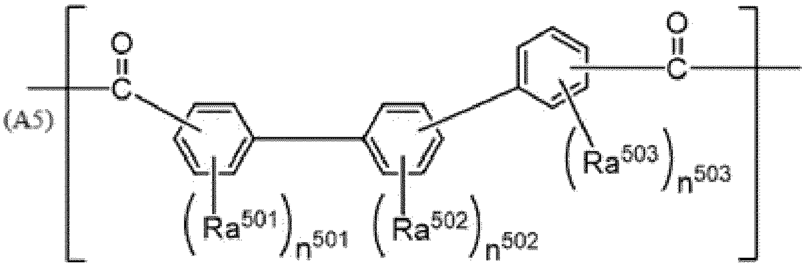

In Formula (A5), $n^{501}$, $n^{502}$, and $n^{503}$ are each independently an integer of 0 or greater and 4 or less, and $n^{501}$ pieces of $Ra^{501}$'s, $n^{502}$ pieces of $Ra^{502}$'s, and $n^{503}$ pieces of $Ra^{503}$'S are each independently an alkyl group having 1 or more and 10 or less carbon atoms, an aryl group having 6 or more and 12 or less carbon atoms, or an alkoxy group having 1 or more and 6 or less carbon atoms.

$n^{501}$ represents, for example, preferably 0, 1, or 2, more preferably 0 or 1, and still more preferably 0.

$n^{502}$ represents, for example, preferably 0, 1, or 2, more preferably 0 or 1, and still more preferably 0.

$n^{503}$ represents, for example, preferably 0, 1, or 2, more preferably 0 or 1, and still more preferably 0.

The specific aspects and the preferred aspects of $Ra^{101}$ in Formula (A1), $Ra^{201}$ and $Ra^{202}$ in Formula (A2), $Ra^{301}$ and $Ra^{302}$ in Formula (A3), $Ra^{401}$ in Formula (A4), and $Ra^{501}$, $Ra^{502}$, and $Ra^{503}$ in Formula (A5) are the same as each other, and hereinafter, $Ra^{101}$, $Ra^{201}$, $Ra^{202}$, $Ra^{301}$, $Ra^{302}$, $Ra^{401}$, $Ra^{501}$, $Ra^{502}$, and $Ra^{503}$ will be collectively referred to as "Ra".

The alkyl group having 1 or more and 10 or less carbon atoms as Ra may be linear, branched, or cyclic. The number of carbon atoms of the alkyl group is, for example, preferably 1 or more and 6 or less, more preferably 1 or more and 4 or less, and still more preferably 1 or 2.

Examples of the linear alkyl group having 1 or more and 10 or less carbon atoms include a methyl group, an ethyl group, a n-propyl group, a n-butyl group, a n-pentyl group, a n-hexyl group, a n-heptyl group, a n-octyl group, a n-nonyl group, and a n-decyl group.

Examples of the branched alkyl group having 3 or more and 10 or less carbon atoms include an isopropyl group, an isobutyl group, an sec-butyl group, a tert-butyl group, an isopentyl group, a neopentyl group, a tert-pentyl group, an isohexyl group, an sec-hexyl group, a tert-hexyl group, an isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, and a tert-decyl group.

Examples of the cyclic alkyl group having 3 or more and 10 or less carbon atoms include a cyclopropyl group, a cyclobutyl group, a cyclopentyl group, a cyclohexyl group, a cycloheptyl group, a cyclooctyl group, a cyclononyl group, a cyclodecyl group, and polycyclic (for example, bicyclic, tricyclic, or spirocyclic) alkyl groups to which these monocyclic alkyl groups are linked.

The aryl group having 6 or more and 12 or less carbon atoms as Ra may be a monocycle or a polycycle. The number of carbon atoms of the aryl group is, for example, preferably 6 or more and 10 or less and more preferably 6.

Examples of the aryl group having 6 or more and 12 or less carbon atoms include a phenyl group, a biphenyl group, a 1-naphthyl group, and a 2-naphthyl group.

The alkyl group in the alkoxy group having 1 or more and 6 or less carbon atoms as Ra may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Hereinafter, dicarboxylic acid units (A1-1) to (A1-9) are shown as specific examples of the dicarboxylic acid unit (A1). The dicarboxylic acid unit (A1) is not limited thereto.

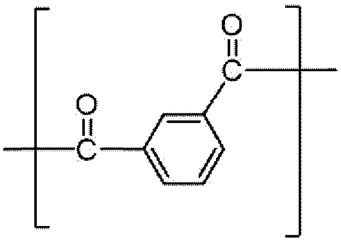

(A 1 − 1)

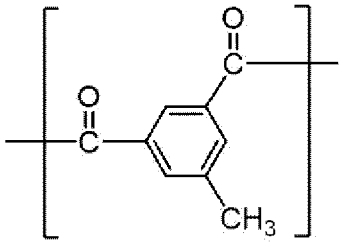

(A 1 − 2)

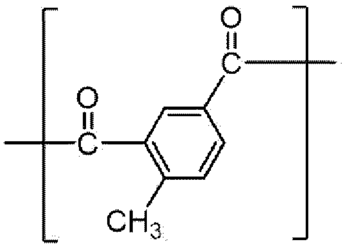

(A 1 − 3)

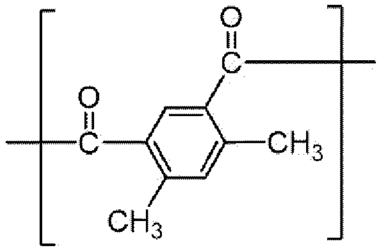

(A 1 − 4)

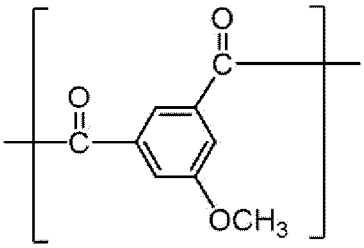

(A 1 − 5)

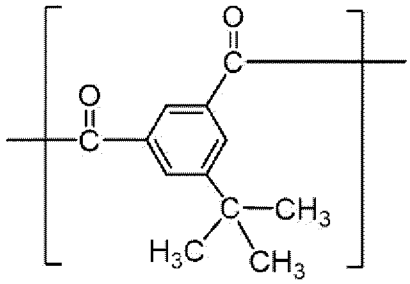

(A 1 − 6)

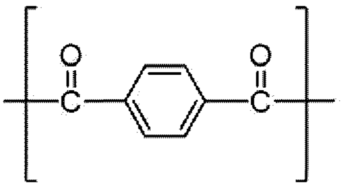

(A 1 − 7)

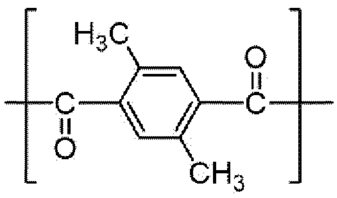

(A 1 − 8)

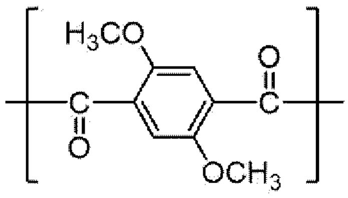

(A 1 − 9)

Hereinafter, dicarboxylic acid units (A2-1) to (A2-3) are shown as specific examples of the dicarboxylic acid unit (A2). The dicarboxylic acid unit (A2) is not limited thereto.

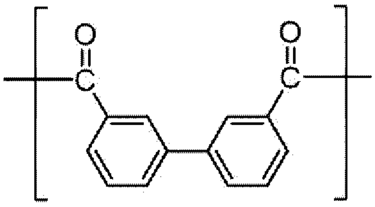

(A 2 − 1)

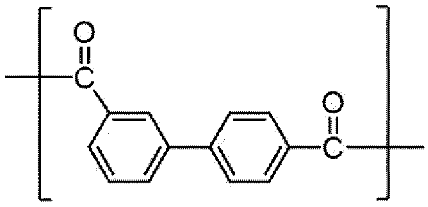

(A 2 − 2)

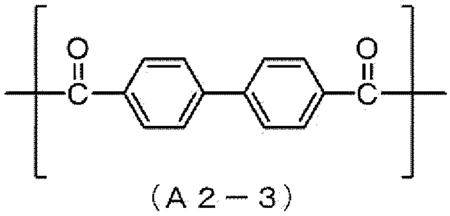

(A 2 − 3)

Hereinafter, dicarboxylic acid units (A3-1) and (A3-2) are shown as specific examples of the dicarboxylic acid unit (A3). The dicarboxylic acid unit (A3) is not limited thereto.

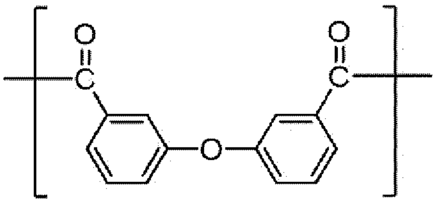

(A 3 − 1)

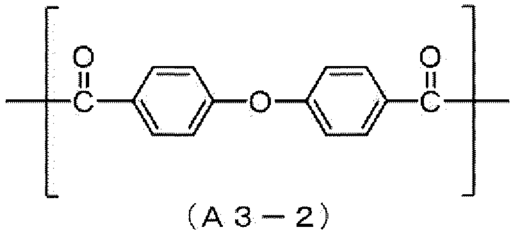

(A 3 − 2)

Hereinafter, dicarboxylic acid units (A4-1) to (A4-3) are shown as specific examples of the dicarboxylic acid unit (A4). The dicarboxylic acid unit (A4) is not limited thereto.

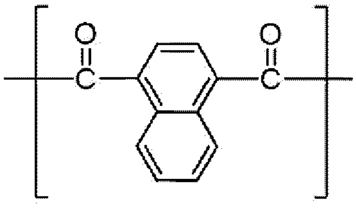

(A 4 − 1)

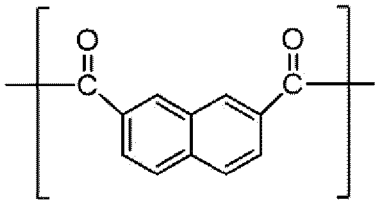

(A 4 − 2)

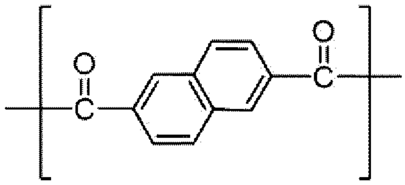

(A 4 − 3)

Hereinafter, dicarboxylic acid units (A5-1) to (A5-4) are shown as specific examples of the dicarboxylic acid unit (A5). The dicarboxylic acid unit (A5) is not limited thereto.

(A 5 − 1)

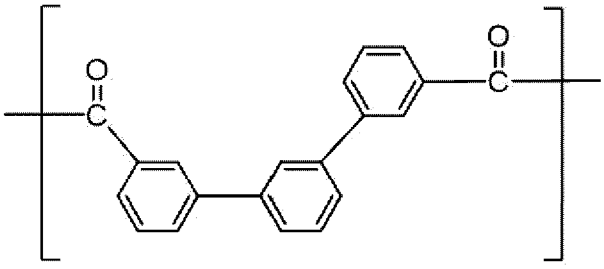

(A5-2)

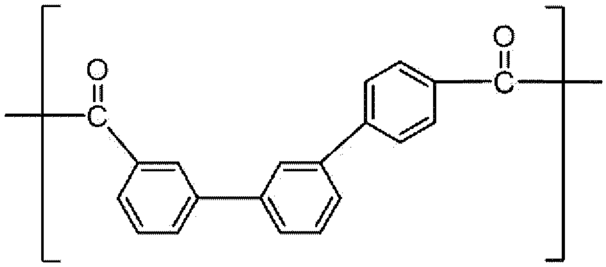

(A5-3)

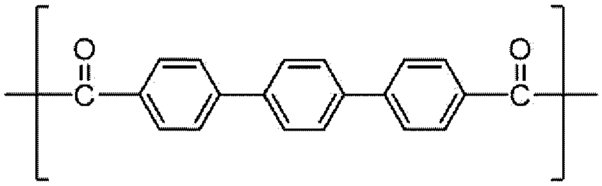

(A5-4)

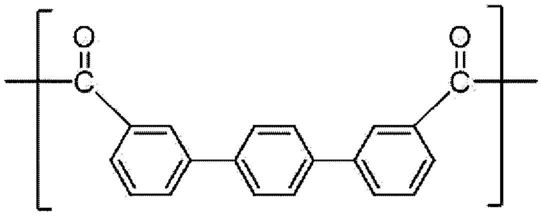

In the above-described specific examples, for example, at least one selected from the group consisting of (A1-1), (A1-7), (A2-3), (A3-2), and (A4-3) is preferably included, at least one selected from the group consisting of (A2-3), (A3-2), and (A4-3) is more preferably included, and at least (A2-3) is still more preferably included as the dicarboxylic acid unit (A).

The dicarboxylic acid unit (A) included in the polyarylate resin (PA) may be used alone or in combination of two or more kinds thereof.

A mass proportion of the dicarboxylic acid unit (A) in the polyarylate resin (PA) is, for example, preferably 15% by mass or more and 60% by mass or less.

In a case where the mass proportion of the dicarboxylic acid unit (A) is 15% by mass or more, the abrasion resistance of the charge transport layer is enhanced. From the viewpoint, the mass proportion of the dicarboxylic acid unit (A) is, for example, more preferably 20% by mass or more, and still more preferably 25% by mass or more.

In a case where the mass proportion of the dicarboxylic acid unit (A) is 60% by mass or less, peeling of the charge transport layer can be suppressed. From the viewpoint, the mass proportion of the dicarboxylic acid unit (A) is, for example, more preferably 55% by mass or less, and still more preferably 50% by mass or less.

The polyarylate resin (PA) may have other dicarboxylic acid units in addition to the dicarboxylic acid unit (A). Examples of other dicarboxylic acid units include aliphatic dicarboxylic acids (such as oxalic acid, malonic acid, maleic acid, fumaric acid, citraconic acid, itaconic acid, glutaconic acid, succinic acid, alkenyl succinic acid, adipic acid, and sebacic acid) units, alicyclic dicarboxylic acid (such as cyclohexanedicarboxylic acid) units, and lower alkyl ester units (for example, having 1 or more and 5 or less carbon atoms) thereof. The dicarboxylic acid units included in the polyarylate resin (PA) may be used alone or in combination of two or more kinds thereof.

The diol unit (B) is a constitutional unit represented by Formula (B).

FORMULA (B)

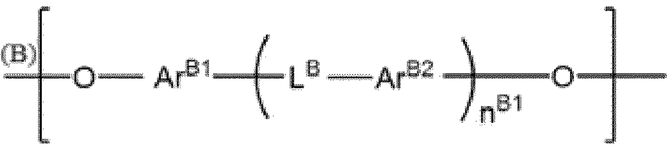

In Formula (B), $Ar^{B1}$ and $Ar^{B2}$ are each independently an aromatic ring which may have a substituent, $L^B$ is a single bond, an oxygen atom, a sulfur atom, or $-C(Rb^1)(Rb^2)-$, and $n^{B1}$ is 0, 1, or 2, where $Rb^1$ and $Rb^2$ are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and $Rb^1$ and $Rb^2$ may be bonded to each other to form a cyclic alkyl group.

The aromatic ring as $Ar^{B1}$ may be a monocycle or a polycycle. Examples of the aromatic ring include a benzene

ring, a naphthalene ring, an anthracene ring, and a phenanthrene ring. Among these, for example, a benzene ring and a naphthalene ring are preferable.

A hydrogen atom on the aromatic ring as $Ar^{B1}$ may be substituted with an alkyl group, an aryl group, an aralkyl group, an alkoxy group, an aryloxy group, a halogen atom, or the like. As the substituent in a case where the aromatic ring as $Ar^{B1}$ is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The aromatic ring as $Ar^{B2}$ may be a monocycle or a polycycle. Examples of the aromatic ring include a benzene ring, a naphthalene ring, an anthracene ring, and a phenanthrene ring. Among these, for example, a benzene ring and a naphthalene ring are preferable.

A hydrogen atom on the aromatic ring as $Ar^{B2}$ may be substituted with an alkyl group, an aryl group, an aralkyl group, an alkoxy group, an aryloxy group, a halogen atom, or the like. As the substituent in a case where the aromatic ring as $Ar^{B2}$ is substituted, for example, an alkyl group having 1 or more and 10 or less carbon atoms, an aryl group having 6 or more and 12 or less carbon atoms, or an alkoxy group having 1 or more and 6 or less carbon atoms is preferable.

The alkyl group having 1 or more and 20 or less carbon atoms, as $Rb^1$ and $Rb^2$, may be linear, branched, or cyclic. The number of carbon atoms of the alkyl group is, for example, preferably 1 or more and 18 or less, more preferably 1 or more and 14 or less, and still more preferably 1 or more and 10 or less.

The aryl group having 6 or more and 12 or less carbon atoms, as $Rb^1$ and $Rb^2$, may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as $Rb^1$ and $Rb^2$, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2.

An aryl group of the aralkyl group having 7 or more and 20 or less carbon atoms, as $Rb^1$ and $Rb^2$, may be a monocycle or a polycycle. The number of carbon atoms of the aryl group is, for example, preferably 6 or more and 10 or less and more preferably 6.

It is preferable that the diol unit (B) includes, for example, at least one selected from the group consisting of a diol unit (B 1) represented by Formula (B 1), a diol unit (B2) represented by Formula (B2), a diol unit (B3) represented by Formula (B3), a diol unit (B4) represented by Formula (B4), a diol unit (B5) represented by Formula (B5), a diol unit (B6) represented by Formula (B6), a diol unit (B7) represented by Formula (B7), and a diol unit (B8) represented by Formula (B8).

For example, the diol unit (B) more preferably includes at least one selected from the group consisting of the diol unit (B1) represented by Formula (B1), the diol unit (B2) represented by Formula (B2), the diol unit (B4) represented by Formula (B4), the diol unit (B5) represented by Formula (B5), and the diol unit (B6) represented by Formula (B6);

still more preferably includes at least one selected from the group consisting of the diol unit (B 1) represented by Formula (B 1), the diol unit (B2) represented by Formula (B2), the diol unit (B5) represented by Formula (B5), and the diol unit (B6) represented by Formula (B6);

even more preferably at least one selected from the group consisting of the diol unit (B1) represented by Formula (B1), the diol unit (B2) represented by Formula (B2), and the diol unit (B6) represented by Formula (B6); and

most preferably at least one selected from the group consisting of the diol unit (B 1) represented by Formula (B1) and the diol unit (B2) represented by Formula (B2).

FORMULA (B1)

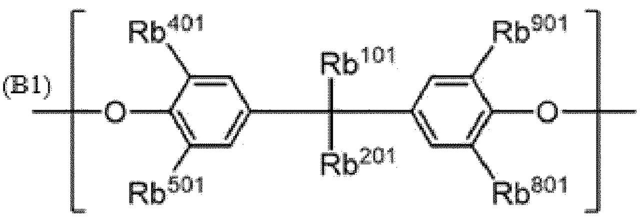

In Formula (B1), $Rb^{101}$ is a branched alkyl group having 4 or more and 20 or less carbon atoms, $Rb^{201}$ is a hydrogen atom or an alkyl group having 1 or more and 3 or less carbon atoms, and $Rb^{401}$, $Rb^{501}$, $Rb^{801}$, and $Rb^{901}$ are each independently a hydrogen atom, an alkyl group having 1 or more and 4 or less carbon atoms, an alkoxy group having 1 or more and 6 or less carbon atoms, or a halogen atom.

The number of carbon atoms in the branched alkyl group having 4 or more and 20 or less carbon atoms, as $Rb^{101}$, is, for example, preferably 4 or more and 16 or less, more preferably 4 or more and 12 or less, and still more preferably 4 or more and 8 or less. Specific examples of $Rb^{101}$ include an isobutyl group, an sec-butyl group, a tert-butyl group, an isopentyl group, a neopentyl group, a tert-pentyl group, an isohexyl group, an sec-hexyl group, a tert-hexyl group, an

isoheptyl group, an sec-heptyl group, a tert-heptyl group, an isooctyl group, an sec-octyl group, a tert-octyl group, an isononyl group, an sec-nonyl group, a tert-nonyl group, an isodecyl group, an sec-decyl group, a tert-decyl group, an isododecyl group, an sec-dodecyl group, a tert-dodecyl group, a tert-tetradecyl group, and a tert-pentadecyl group.

FORMULA (B2)

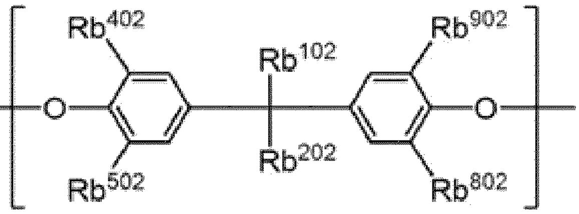

In Formula (B2), $Rb^{102}$ is a linear alkyl group having 4 or more and 20 or less carbon atoms, $Rb^{202}$ is a hydrogen atom or an alkyl group having 1 or more and 3 or less carbon atoms, and $Rb^{402}$, $Rb^{502}$, $Rb^{802}$, and $Rb^{902}$ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 4 or more and 20 or less carbon atoms, as $Rb^{102}$, is, for example, preferably 4 or more and 16 or less, more preferably 4 or more and 12 or less, and still more preferably 4 or more and 8 or less. Specific examples of $Rb^{102}$ include an n-butyl group, an n-pentyl group, an n-hexyl group, an n-heptyl group, an n-octyl group, an n-nonyl group, an n-decyl group, an n-undecyl group, an n-dodecyl group, a tridecyl group, an n-tetradecyl group, an n-pentadecyl group, an n-heptadecyl group, an n-octadecyl group, an n-nonadecyl group, and an n-icosyl group.

FORMULA (B3)

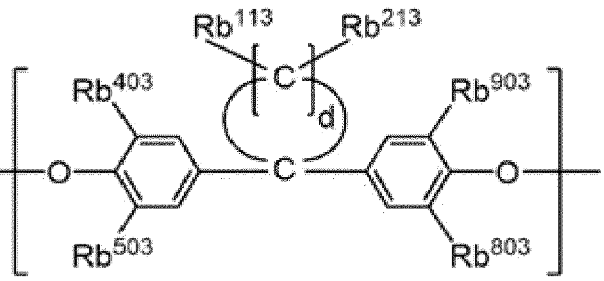

In Formula (B3), $Rb^{113}$ and $Rb^{213}$ are each independently a hydrogen atom, a linear alkyl group having 1 or more and 3 or less carbon atoms, an alkoxy group having 1 or more and 4 or less carbon atoms, or a halogen atom, d is an integer of 7 or greater and 15 or less, and $Rb^{403}$, $Rb^{503}$, $Rb^{803}$, and $Rb^{903}$ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as $Rb^{113}$ and $Rb^{213}$, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as $Rb^{113}$ and $Rb^{213}$, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as $Rb^{113}$ and $Rb^{213}$ include a fluorine atom, a chlorine atom, a bromine atom, and an iodine atom.

FORMULA (B4)

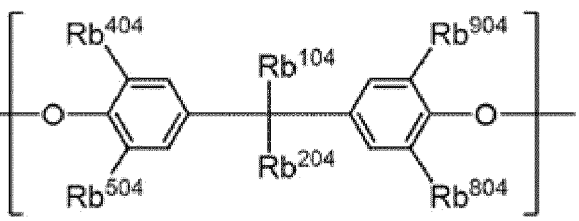

In Formula (B4), $Rb^{104}$ and $Rb^{204}$ are each independently a hydrogen atom or an alkyl group having 1 or more and 3 or less carbon atoms, and $Rb^{404}$, $Rb^{504}$, $Rb^{804}$, and $Rb^{904}$ are each independently a hydrogen atom, an alkyl group having 1 or more and 4 or less carbon atoms, an alkoxy group having 1 or more and 6 or less carbon atoms, or a halogen atom.

The alkyl group having 1 or more and 3 or less carbon atoms, as $Rb^{104}$, may be linear, branched, or cyclic. The number of carbon atoms in the alkyl group is, for example, preferably 1 or 2 and more preferably 1. Specific examples of $Rb^{104}$ include a methyl group, an ethyl group, an n-propyl group, an isopropyl group, and a cyclopropyl group.

FORMULA (B5)

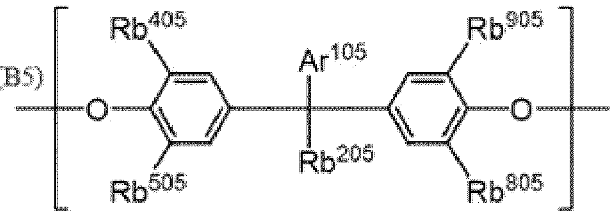

In Formula (B5), $Ar^{105}$ is an aryl group having 6 or more and 12 or less carbon atoms or an aralkyl group having 7 or more and 20 or less carbon atoms, $Rb^{205}$ is a hydrogen atom or an alkyl group having 1 or more and 3 or less carbon atoms, and $Rb^{405}$, $Rb^{505}$, $Rb^{805}$, and $Rb^{905}$ are each independently a hydrogen atom, an alkyl group having 1 or more and 4 or less carbon atoms, an alkoxy group having 1 or more and 6 or less carbon atoms, or a halogen atom.

The aryl group having 6 or more and 12 or less carbon atoms, as $Ar^{105}$, may be a monocycle or a polycycle. The number of carbon atoms of the aryl group is, for example, preferably 6 or more and 10 or less and more preferably 6.

An alkyl group of the aralkyl group having 7 or more and 20 or less carbon atoms, as $Ar^{105}$, may be linear, branched, or cyclic. The number of carbon atoms in the alkyl group of the aralkyl group having 7 or more and 20 or less carbon atoms is, for example, preferably 1 or more and 4 or less, more preferably 1 or more and 3 or less, and still more preferably 1 or 2. An aryl group of the aralkyl group having 7 or more and 20 or less carbon atoms, as $Ar^{105}$, may be a monocycle or a polycycle. The number of carbon atoms of the aryl group is, for example, preferably 6 or more and 10 or less and more preferably 6. Examples of the aralkyl group having 7 or more and 20 or less carbon atoms include a benzyl group, a phenylethyl group, a phenylpropyl group, a 4-phenylbutyl group, a phenylpentyl group, a phenylhexyl group, a phenylheptyl group, a phenyloctyl group, a phenylnonyl group, a naphthylmethyl group, a naphthylethyl group, an anthracenylmethyl group, and a phenyl-cyclopentylmethyl group.

FORMULA (B6)

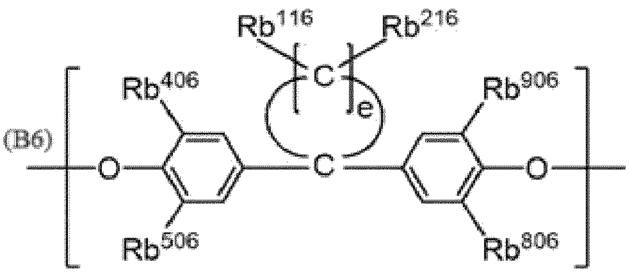

In Formula (B6), $Rb^{116}$ and $Rb^{216}$ are each independently a hydrogen atom, a linear alkyl group having 1 or more and 3 or less carbon atoms, an alkoxy group having 1 or more and 4 or less carbon atoms, or a halogen atom, e is an integer of 4 or greater and 6 or less, and $Rb^{406}$, $Rb^{506}$, $Rb^{806}$, and $Rb^{906}$ are each independently a hydrogen atom, an alkyl group having 1 or more and 4 or less carbon atoms, an alkoxy group having 1 or more and 6 or less carbon atoms, or a halogen atom.

The number of carbon atoms in the linear alkyl group having 1 or more and 3 or less carbon atoms, as $Rb^{116}$ and $Rb^{216}$, is, for example, preferably 1 or 2 and more preferably 1. Specific examples of such a group include a methyl group, an ethyl group, and an n-propyl group.

An alkyl group of the alkoxy group having 1 or more and 4 or less carbon atoms, as $Rb^{116}$ and $Rb^{216}$, may be linear, branched, or cyclic. The number of carbon atoms in the alkyl group of the alkoxy group having 1 or more and 4 or less carbon atoms is, for example, preferably 1 or more and 3 or less, more preferably 1 or 2, and still more preferably 1. Specific examples of such a group include a methoxy group, an ethoxy group, an n-propoxy group, an n-butoxy group, an isopropoxy group, an isobutoxy group, an sec-butoxy group, a tert-butoxy group, a cyclopropoxy group, and a cyclobutoxy group.

Examples of the halogen atom as $Rb^{116}$ and $Rb^{216}$ include a fluorine atom, a chlorine atom, a bromine atom, and an iodine atom.

FORMULA (B7)

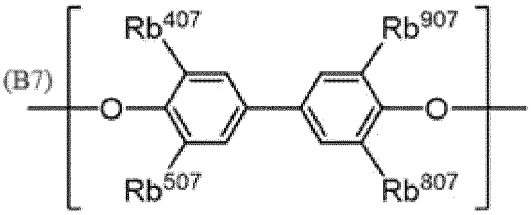

In Formula (B7), $Rb^{407}$, $Rb^{507}$, $Rb^{807}$, and $Rb^{907}$ are each independently a hydrogen atom, an alkyl group having 1 or more and 4 or less carbon atoms, an alkoxy group having 1 or more and 6 or less carbon atoms, or a halogen atom.

FORMULA (B8)

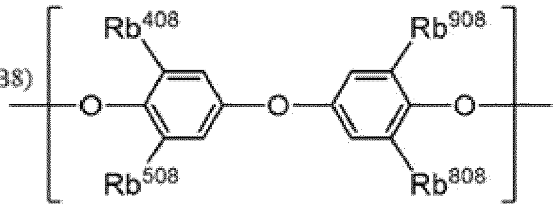

In Formula (B8), $Rb^{408}$, $Rb^{508}$, $Rb^{808}$, and $Rb^{908}$ are each independently a hydrogen atom, an alkyl group having 1 or more and 4 or less carbon atoms, an alkoxy group having 1 or more and 6 or less carbon atoms, or a halogen atom.

Specific forms and preferred forms of $Rb^{201}$ in Formula (B1), $Rb^{202}$ in Formula (B2), $Rb^{204}$ in Formula (B4), and $Rb^{205}$ in Formula (B5) are the same as each other, so that $Rb^{201}$, $Rb^{202}$, $Rb^{204}$, and $Rb^{205}$ will be collectively referred to as "$Rb^{200}$".

The alkyl group having 1 or more and 3 or less carbon atoms, as $Rb^{200}$, may be linear, branched, or cyclic. The number of carbon atoms in the alkyl group is, for example, preferably 1 or 2 and more preferably 1.

Examples of the alkyl group having 1 or more and 3 or less carbon atoms include a methyl group, an ethyl group, an n-propyl group, an isopropyl group, and a cyclopropyl group.

Specific forms and preferred forms of $Rb^{401}$ in Formula (B1), $Rb^{402}$ in Formula (B2), $Rb^{403}$ in Formula (B3), $Rb^{404}$ in Formula (B4), $Rb^{405}$ in Formula (B5), $Rb^{406}$ in Formula (B6), $Rb^{407}$ in Formula (B7), and $Rb^{408}$ in Formula (B8) are the same as each other, so that $Rb^{401}$, $Rb^{402}$, $Rb^{403}$, $Rb^{404}$, $Rb^{405}$, $Rb^{406}$, $Rb^{407}$, and $Rb^{408}$ will be collectively referred to as "$Rb^{400}$".

The alkyl group having 1 or more and 4 or less carbon atoms, as $Rb^{400}$, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as $Rb^{400}$, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as $Rb^{400}$ include a fluorine atom, a chlorine atom, a bromine atom, and an iodine atom.

Specific forms and preferred forms of $Rb^{501}$ in Formula (B1), $Rb^{502}$ in Formula (B2), $Rb^{503}$ in Formula (B3), $Rb^{504}$ in Formula (B4), $Rb^{505}$ in Formula (B5), $Rb^{506}$ in Formula (B6), $Rb^{507}$ in Formula (B7), and $Rb^{508}$ in Formula (B8) are the same as each other, so that $Rb^{501}$, $Rb^{502}$, $Rb^{503}$, $Rb^{504}$, $Rb^{505}$, $Rb^{506}$, $Rb^{507}$, and $Rb^{508}$ will be collectively referred to as "$Rb^{500}$".

The alkyl group having 1 or more and 4 or less carbon atoms, as $Rb^{500}$, may be linear, branched, or cyclic. The

number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as $Rb^{500}$, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as $Rb^{500}$ include a fluorine atom, a chlorine atom, a bromine atom, and an iodine atom.

Specific forms and preferred forms of $Rb^{801}$ in Formula (B1), $Rb^{802}$ in Formula (B2), $Rb^{803}$ in Formula (B3), $Rb^{804}$ in Formula (B4), $Rb^{805}$ in Formula (B5), $Rb^{806}$ in Formula (B6), $Rb^{807}$ in Formula (B7), and $Rb^{808}$ in Formula (B8) are the same as each other, so that $Rb^{801}$, $Rb^{802}$, $Rb^{803}$, $Rb^{804}$, $Rb^{805}$, $Rb^{806}$, $Rb^{807}$, and $Rb^{808}$ will be collectively referred to as "$Rb^{800}$".

The alkyl group having 1 or more and 4 or less carbon atoms, as $Rb^{800}$, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as $Rb^{800}$, may be linear, branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as $Rb^{800}$ include a fluorine atom, a chlorine atom, a bromine atom, and an iodine atom.

Specific forms and preferred forms of $Rb^{901}$ in Formula (B1), $Rb^{902}$ in Formula (B2), $Rb^{903}$ in Formula (B3), $Rb^{904}$ in Formula (B4), $Rb^{905}$ in Formula (B5), $Rb^{906}$ in Formula (B6), $Rb^{907}$ in Formula (B7), and $Rb^{908}$ in Formula (B8) are the same as each other, so that $Rb^{901}$, $Rb^{902}$, $Rb^{903}$, $Rb^{904}$, $Rb^{905}$, $Rb^{906}$, $Rb^{907}$, and $Rb^{908}$ will be collectively referred to as "$Rb^{900}$".

The alkyl group having 1 or more and 4 or less carbon atoms, as $Rb^{900}$, may be linear, branched, or cyclic. The number of carbon atoms in the alkyl group is, for example, preferably 1 or more and 3 or less, more preferably 1 or 2, and still more preferably 1.

Examples of the linear alkyl group having 1 or more and 4 or less carbon atoms include a methyl group, an ethyl group, an n-propyl group, and an n-butyl group.

Examples of the branched alkyl group having 3 or 4 carbon atoms include an isopropyl group, an isobutyl group, an sec-butyl group, and a tert-butyl group.

Examples of the cyclic alkyl group having 3 or 4 carbon atoms include a cyclopropyl group and a cyclobutyl group.

An alkyl group of the alkoxy group having 1 or more and 6 or less carbon atoms, as $Rb^{900}$, may be linear,

branched, or cyclic. The number of carbon atoms in the alkyl group of the alkoxy group having 1 or more and 6 or less carbon atoms is, for example, preferably 1 or more and 4 or less, more preferably 1 or more and 3 or less, and still more preferably 1 or 2.

Examples of the linear alkoxy group having 1 or more and 6 or less carbon atoms include a methoxy group, an ethoxy group, an n-propoxy group, an n-butoxy group, an n-pentyloxy group, and an n-hexyloxy group.

Examples of the branched alkoxy group having 3 or more and 6 or less carbon atoms include an isopropoxy group, an isobutoxy group, an sec-butoxy group, a tert-butoxy group, an isopentyloxy group, a neopentyloxy group, a tert-pentyloxy group, an isohexyloxy group, an sec-hexyloxy group, and a tert-hexyloxy group.

Examples of the cyclic alkoxy group having 3 or more and 6 or less carbon atoms include a cyclopropoxy group, a cyclobutoxy group, a cyclopentyloxy group, and a cyclohexyloxy group.

Examples of the halogen atom as $Rb^{900}$ include a fluorine atom, a chlorine atom, a bromine atom, and an iodine atom.

Hereinafter, diol units (B1-1) to (B 1-6) are shown as specific examples of the diol unit (B1). The diol unit (B1) is not limited thereto.

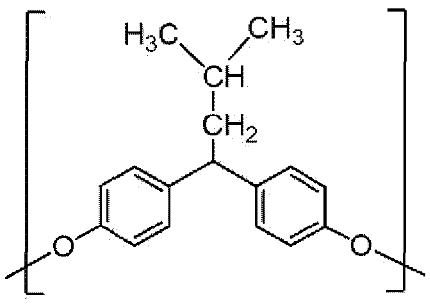
(B 1 − 1)

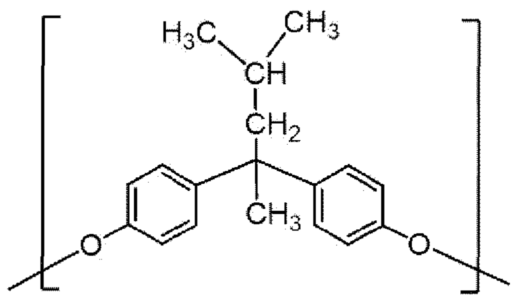
(B 1 − 2)

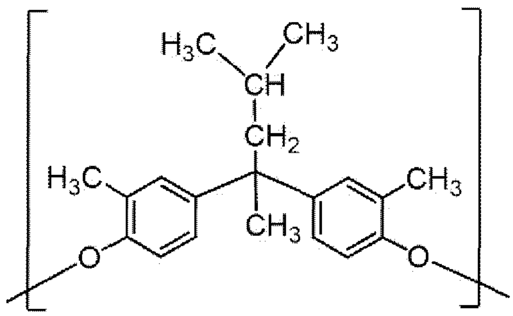
(B 1 − 3)

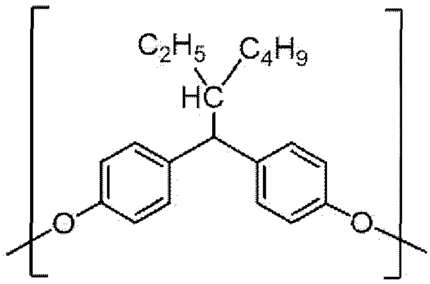
(B 1 − 4)

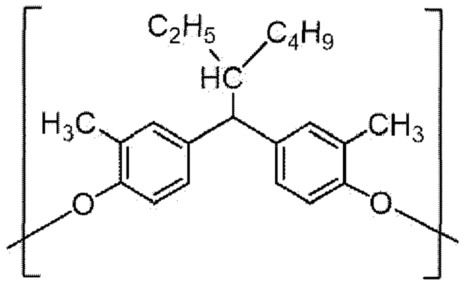
(B 1 − 5)

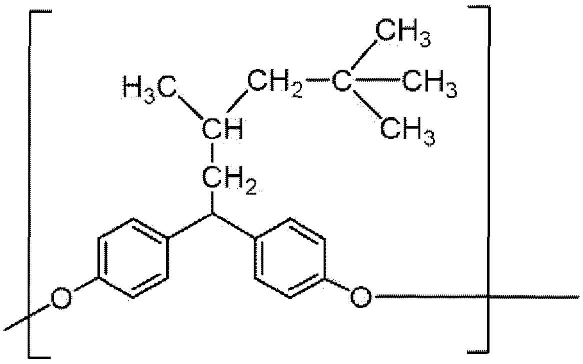

(B 1 − 6)

Hereinafter, diol units (B2-1) to (B2-11) are shown as specific examples of the diol unit (B2). The diol unit (B2) is not limited thereto.

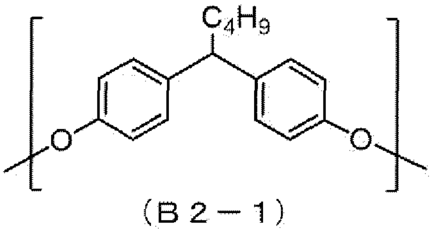

(B 2 − 1)

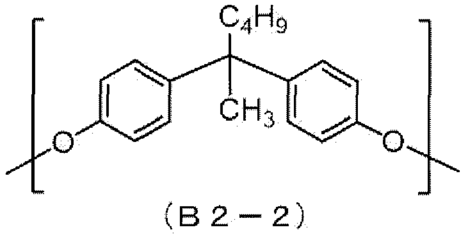

(B 2 − 2)

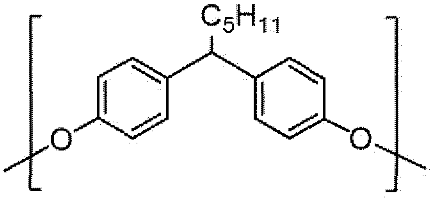

(B 2 − 3)

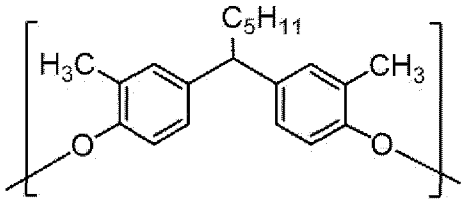

(B 2 − 4)

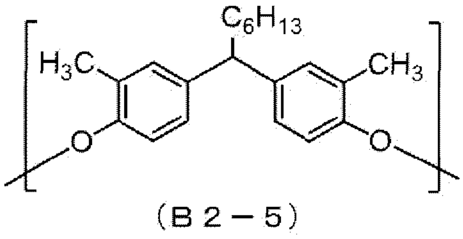

(B 2 − 5)

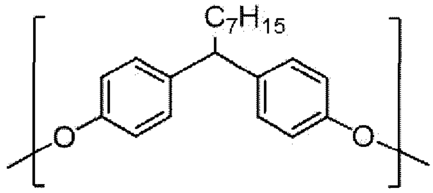

(B 2 − 6)

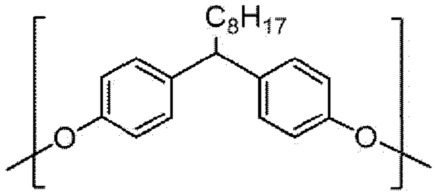

(B 2 − 7)

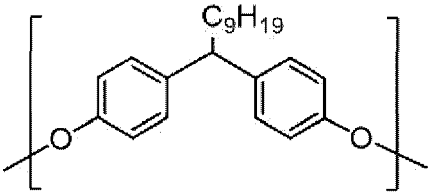

(B2-8)

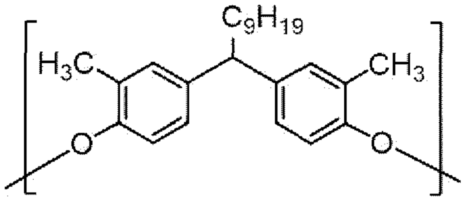

(B2-9)

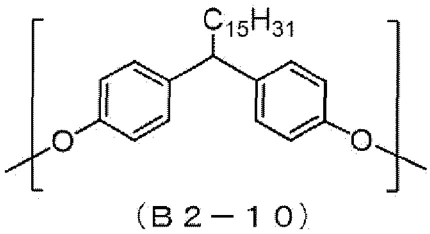

(B2-10)

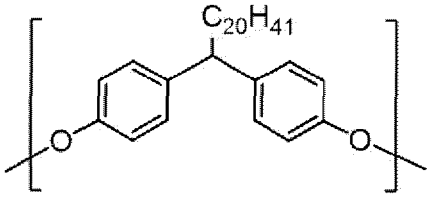

(B2-11)

Hereinafter, diol units (B3-1) to (B3-4) are shown as specific examples of the diol unit (B3). The diol unit (B3) is not limited thereto.

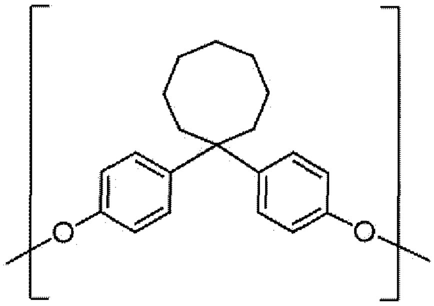

(B3-1)

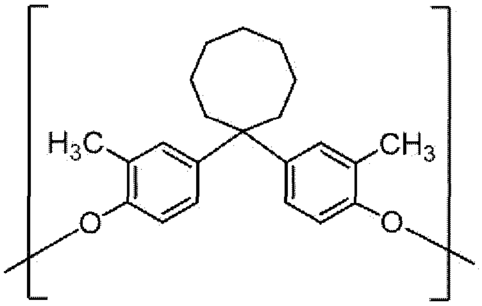

(B3-2)

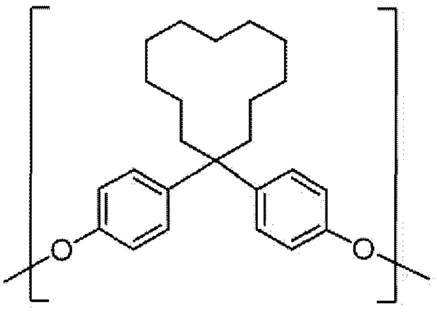

(B3-3)

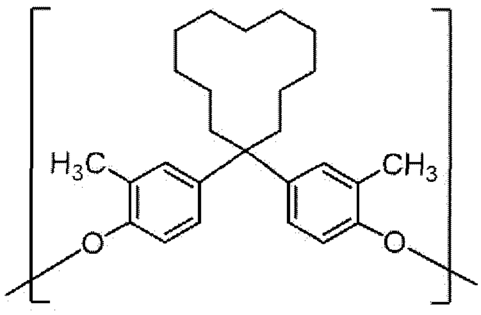

(B3-4)

Hereinafter, diol units (B4-1) to (B4-7) are shown as specific examples of the diol unit (B4). The diol unit (B4) is not limited thereto.

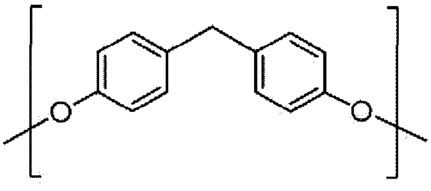

(B4-1)

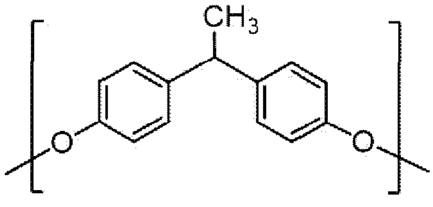

(B4-2)

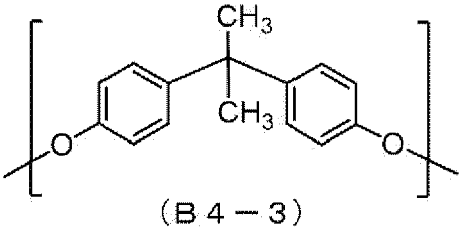

(B 4 − 3)

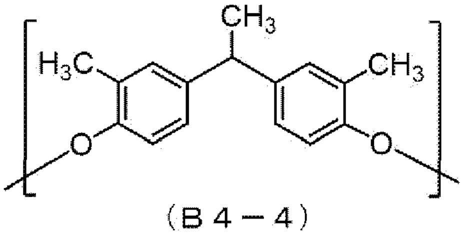

(B 4 − 4)

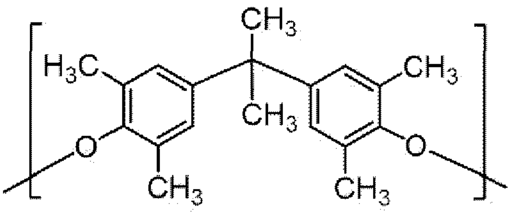

(B 4 − 5)

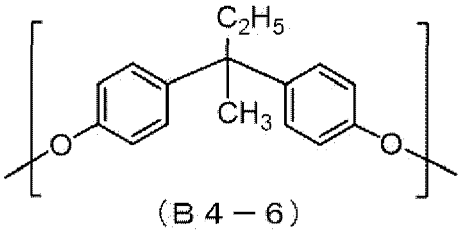

(B 4 − 6)

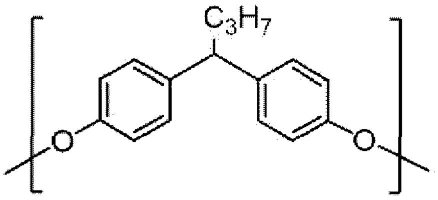

(B 4 − 7)

Hereinafter, diol units (B5-1) to (B5-6) are shown as specific examples of the diol unit (B5). The diol unit (B5) is not limited thereto.

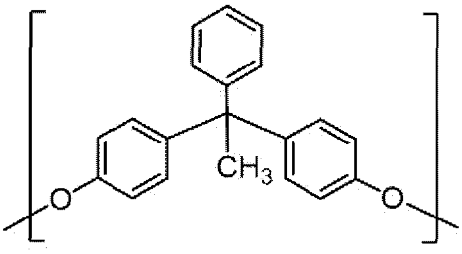

(B 5 − 1)

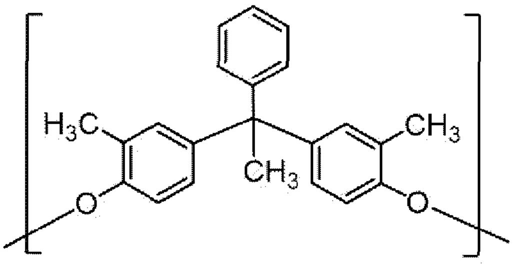

(B 5 − 2)

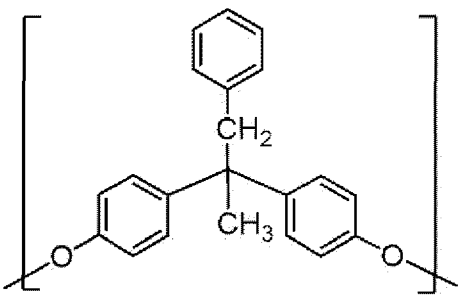

(B 5 − 3)

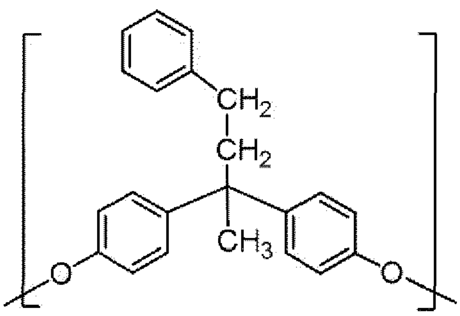

(B 5 − 4)

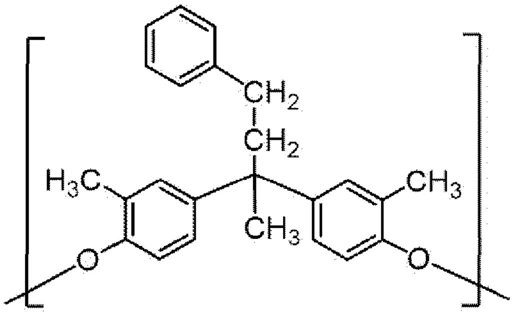

(B 5 − 5)

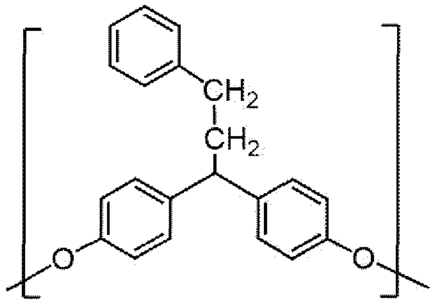

(B 5 − 6)

Hereinafter, diol units (B6-1) to (B6-4) are shown as specific examples of the diol unit (B6). The diol unit (B6) is not limited thereto.

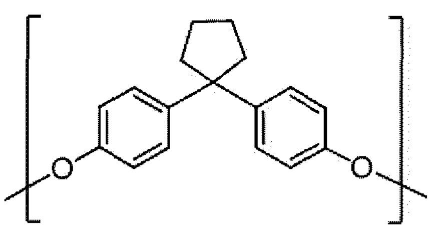

(B 6 − 1)

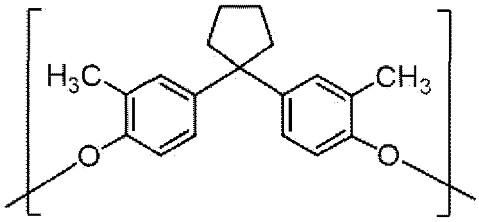

(B 6 − 2)

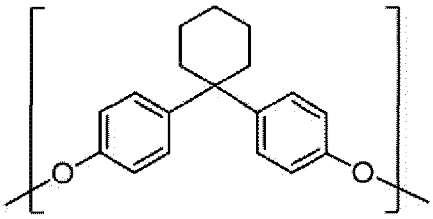

(B 6 − 3)

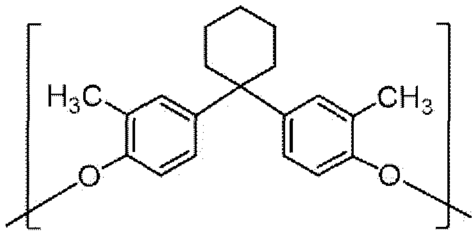

(B 6 − 4)

Hereinafter, diol units (B7-1) to (B7-3) are shown as specific examples of the diol unit (B7). The diol unit (B7) is not limited thereto.

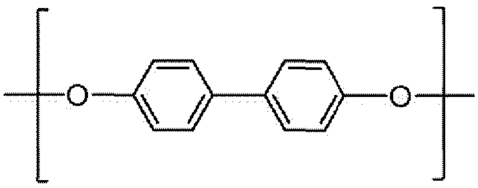

(B 7 − 1)

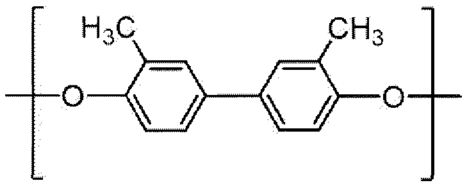

(B 7 − 2)

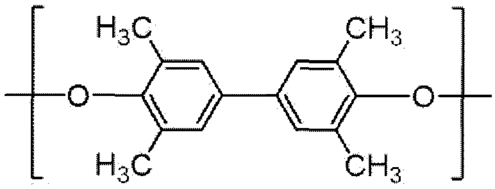

(B 7 − 3)

Hereinafter, diol units (B8-1) to (B8-3) are shown as specific examples of the diol unit (B8). The diol unit (B8) is not limited thereto.

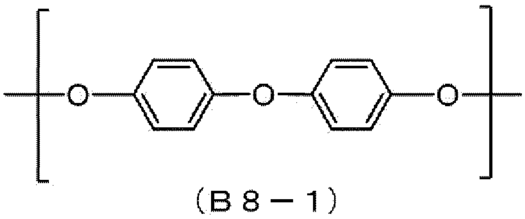

(B 8 − 1)

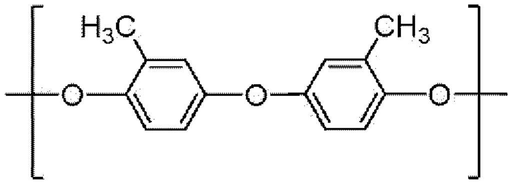

(B 8 − 2)

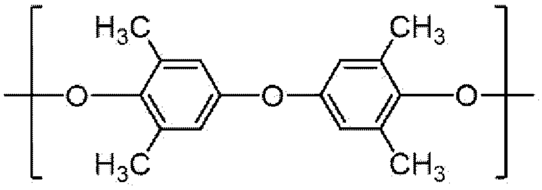

(B 8 − 3)

The diol unit (B) included in the polyarylate resin (PA) may be used alone or in combination of two or more kinds thereof.

A mass proportion of the diol unit (B) in the polyarylate resin (PA) is, for example, preferably 25% by mass or more and 80% by mass or less.

In a case where the mass proportion of the diol unit (B) is 25% by mass or greater, peeling of the charge transport layer can be further suppressed. From the viewpoint, the mass proportion of the diol unit (B) is, for example, more preferably 30% by mass or greater and still more preferably 35% by mass or greater.

In a case where the mass proportion of the diol unit (B) is 80% by mass or less, the solubility in a coating solution for forming the charge transport layer is maintained, and thus the abrasion resistance can be improved. From the viewpoint, the mass proportion of the diol unit (B) is, for example, more preferably 75% by mass or less and still more preferably 70% by mass or less.

The polyarylate resin (PA) may have other diol units in addition to the diol unit (B). Examples of other diol units include aliphatic diol (such as ethylene glycol, diethylene glycol, triethylene glycol, propylene glycol, butanediol, hexanediol, and neopentyl glycol) units, and alicyclic diol (such as cyclohexanediol, cyclohexanedimethanol, and hydrogenated bisphenol A) units. The diol units included in the polyarylate resin (PA) may be used alone or in combination of two or more kinds thereof.

A terminal of the polyarylate resin (PA) may be sealed or modified with a terminal-sealing agent, a molecular weight modifier, or the like used in a case of the production. Examples of the terminal-sealing agent or the molecular weight modifier include monohydric phenol, monovalent acid chloride, monohydric alcohol, and monovalent carboxylic acid.

Examples of the monohydric phenol include phenol, o-cresol, m-cresol, p-cresol, o-ethylphenol, m-ethylphenol, p-ethylphenol, o-propylphenol, m-propylphenol, p-propylphenol, o-tert-butylphenol, m-tert-butylphenol, p-tert-butylphenol, pentylphenol, hexylphenol, octylphenol, nonylphenol, a 2,6-dimethylphenol derivative, a 2-methylphenol derivative, o-phenylphenol, m-phenylphenol, p-phenylphenol, o-methoxyphenol, m-methoxyphenol, p-methoxyphenol, 2,3,5-trimethylphenol, 2,3,6-trimethylphenol, 2,3-xylenol, 2,4-xylenol, 2,5-xylenol, 2,6-xylenol, 3,4-xylenol, 3,5-xylenol, 2-phenyl-2-(4-hydroxyphenyl)propane, 2-phenyl-2-(2-hydroxyphenyl)propane, and 2-phenyl-2-(3-hydroxyphenyl)propane.

Examples of the monovalent acid chloride include monofunctional acid halides such as benzoyl chloride, benzoic acid chloride, methanesulfonyl chloride, phenylchloroformate, acetic acid chloride, butyric acid chloride, octyl acid chloride, benzenesulfonyl chloride, benzenesulfinyl chloride, sulfinyl chloride, benzene phosphonyl chloride, and substituents thereof.

Examples of the monohydric alcohol include methanol, ethanol, n-propanol, isopropanol, n-butanol, 2-butanol, pentanol, hexanol, dodecyl alcohol, stearyl alcohol, benzyl alcohol, and phenethyl alcohol.

Examples of the monovalent carboxylic acid include acetic acid, propionic acid, octanoic acid, cyclohexanecarboxylic acid, benzoic acid, toluic acid, phenylacetic acid, p-tert-butylbenzoic acid, and p-methoxyphenylacetic acid.

The weight-average molecular weight of the polyarylate resin (PA) is, for example, preferably 30,000 or greater and 300,000 or less, more preferably 40,000 or greater and 250,000 or less, and still more preferably 50,000 or greater and 200,000 or less.

The molecular weight of the polyarylate resin (PA) is a molecular weight in terms of polystyrene measured by gel permeation chromatography (GPC). The GPC is carried out by using tetrahydrofuran as an eluent.

The polyarylate resin (PA) can be obtained by polycondensing a monomer providing the dicarboxylic acid unit (A), a monomer providing the diol unit (B), and other monomers as necessary using a method in the related art. Examples of the method of polycondensing monomers include an interfacial polymerization method, a solution polymerization method,

and a melt polymerization method. The interfacial polymerization method is a polymerization method of mixing a divalent carboxylic acid halide dissolved in an organic solvent that is incompatible with water and dihydric alcohol dissolved in an alkali aqueous solution to obtain polyester. Examples of documents related to the interfacial polymerization method include W. M. EARECKSON, J. Poly. Sci., XL399, 1959, and JP1965-1959B (JP-S40-1959B). Since the interfacial polymerization method enables the reaction to proceed faster than the reaction carried out by the solution polymerization method and also enables suppression of hydrolysis of the divalent carboxylic acid halide, as a result, a high-molecular-weight polyarylate resin (PA) can be obtained.

A proportion of the polyarylate resin (PA) in the total binder resin is, for example, preferably 20% by mass or more and 80% by mass or less, more preferably 25% by mass or more and 75% by mass or less, and still more preferably 30% by mass or more and 70% by mass or less with respect to the charge transport layer.

(Other Binder Resins)

In addition to the polyarylate resin (PA), a polycarbonate resin may be used in combination as the binder resin used in the charge transport layer. In a case where a polyarylate resin (PA) and a polycarbonate resin are used in combination, the ester bond of the polycarbonate has higher symmetry and lower local polarity than the carbonate ester bond of the polyarylate. Therefore, for example, it is presumed that the number of carriers trapped in the charge transport layer is smaller than that in a case where the polyarylate resin is contained alone, and the charge movement is less likely to be hindered, which is preferable.

A proportion of the polyarylate resin (PA) in a total amount of the polyarylate resin (PA) and the polycarbonate resin contained in the charge transport layer is, for example, preferably 20% by mass or more and 80% by mass or less, more preferably 25% by mass or more and 75% by mass or less, and still more preferably 30% by mass or more and 70% by mass or less.

In the polyarylate resin (PA), resin molecules are bonded to each other by an intermolecular force due to stacking of aromatic rings, and thus the abrasion resistance of the charge transport layer is improved. As the polyarylate resin (PA), for example, a polycondensate of bisphenols and an aromatic divalent carboxylic acid is preferable.

As the polycarbonate resin, for example, a polycarbonate resin in which constitutional units having an aromatic ring are continuous is preferable. In the polycarbonate resin, resin molecules are bonded to each other by an intermolecular force due to stacking of aromatic rings, and thus the abrasion resistance of the charge transport layer is improved. Examples of aspects of the polycarbonate resin include, specifically, the polycarbonate resin disclosed in JP2023-121553A.

As a combination of the polyarylate resin (PA) and the polycarbonate resin, for example, a combination of resins each having a constitutional unit containing a biphenyl represented by Formula (BP) is preferable. That is, for example, it is preferable that the polyarylate resin (PA) and the polycarbonate resin each have a constitutional unit containing biphenyl represented by Formula (BP). Since the polyarylate resin (PA) and the polycarbonate resin each contain biphenyl, the alignment between molecules is strengthened. As a result, the dielectric constant of the charge transport layer increases, and in a case where the same number of charges are trapped therein, the potential variation is less likely to occur, and thus the potential variation after the electrostatic latent image formation is easily suppressed.

In addition, since both have a structural unit containing biphenyl, it is presumed that the compatibility between the polyarylate resin (PA) and the polycarbonate resin is improved, and the charge trapping derived from the structure of each resin is reduced.

FORMULA (BP) 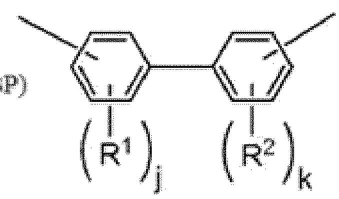

In Formula (BP), j is an integer of 0 or greater and 4 or less, j pieces of $R^1$'s are each independently a methyl group or an ethyl group, k is an integer of 0 or greater and 4 or less, and k pieces of $R^2$'s are each independently a methyl group or an ethyl group.

The biphenyl represented by Formula (BP) may be an entire structure or a part of a structure obtained by removing an ester bond (-C(=O)O-) or a carbonate bond (-OC(=O)O-) from the constitutional unit including the biphenyl represented by Formula (BP). In other words, the right end and the left end of the biphenyl represented by Formula (BP) may be each independently bonded to an ester bond or a carbonate bond directly or bonded to an ester bond or a carbonate bond via another atom or an atomic group.

j is an integer of 0 or greater and 4 or less, for example, preferably an integer of 0 or greater and 3 or less, more

preferably an integer of 0 or greater and 2 or less, still more preferably 0 or 1, and particularly preferably 0.

In a case where j is an integer of 1 or greater, j pieces of $R^1$'s are each independently a methyl group or an ethyl group and, for example, preferably a methyl group.

k is an integer of 0 or greater and 4 or less, for example, preferably an integer of 0 or greater and 3 or less, more preferably an integer of 0 or greater and 2 or less, still more preferably 0 or 1, and particularly preferably 0.

In a case where k is an integer of 1 or greater, k pieces of $R^2$'s are each independently a methyl group or an ethyl group and, for example, preferably a methyl group.

The biphenyl represented by Formula (BP) is, for example, preferably 4,4'-biphenyl with respect to a linking position in a main chain.

As a combination of the polyarylate resin (PA) and the polycarbonate resin, for example, a combination of a polyarylate resin (PA) having at least one of a dicarboxylic acid unit (A2-3) or a diol unit (B7-1) and a polycarbonate resin having a constitutional unit (Cb7-1) is particularly preferable.

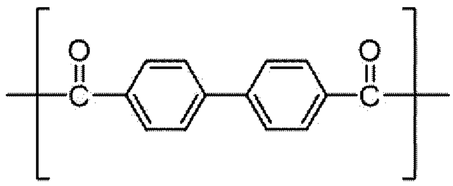

(A2-3)

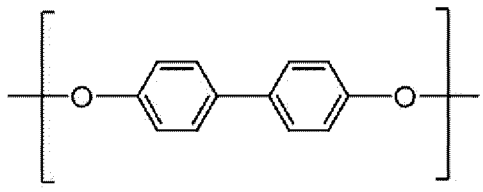

(B7-1)

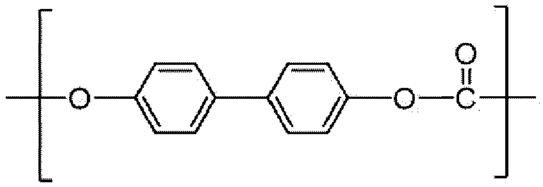

(Cb7-1)

In addition to the resin of a polyarylate resin (PA) and a polycarbonate resin, other resins such as a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, a poly-N-vinylcarbazole, and a polysilane may be used as the binder resin used in the charge transport layer.

However, the proportion of the other resin in the binder resin is, for example, preferably 10% by mass or less and preferably 5% by mass or less.

A blending ratio between the charge transport material and the binder resin is, for example, preferably 10:1 to 1:5 in terms of mass ratio.

(Other additives)

The charge transport layer may also contain other known additives.

For example, the charge transport layer may contain a phenolic compound.

Examples of the phenolic compound contained in the charge transport layer include phenol, cresol, catechol, resorcinol, hydroquinone, naphthol, and bisphenol (bisphenol A, AP, AF, B, BP, C, C2, E, F, G, M, S, P, PH, TMC, and Z). The phenolic compound may be used alone or in combination of two or more kinds thereof.

Examples of the phenolic compound contained in the charge transport layer also include a hindered phenolic compound. From the viewpoint of suppressing oxidative deterioration of the charge transport layer, the phenolic compound contained in the charge transport layer preferably includes, for example, a hindered phenolic compound. The hindered phenolic compound is generally a compound in which at least one of ortho positions of a hydroxy group of phenol is substituted with a bulky group, and exhibition of an oxidation inhibiting action of the composition is shown.

Examples of the hindered phenolic compound include the following.

- · Alkylated monophenol compound and derivative thereof: for example, 2,6-di-t-butyl-4-methylphenol, 2,6-di-t-butyl-4-ethylphenol, octyl-3,5-di-t-butyl-4-hydroxy-hydrocinnamate
- · Alkylated hydroquinone compound and a derivative thereof: for example, 2,5-di-t-butylhydroquinone, 2,5-di-t-amylhydroquinone

· Alkyl thiomethyl phenol compound and a derivative thereof: for example, 2,4-dioctylthiomethyl-6-t-butylphenol, 2,4-dioctylthiomethyl-6-methylphenol, 2,4-dioctylthiomethyl-6-ethylphenol, and 2,6-didodecylthiomethyl-4-nonylphenol

· Alkylidene bisphenol compound and derivative thereof: for example, 4,4'-butylidenebis(6-t-butyl-3-methylphenol), 2,2'-methylenebis(6-t-butyl-4-methylphenol), 2,2'-methylenebis(6-t-butyl-4-ethylphenol), 2-t-butyl-6-(3-t-butyl-2-hydroxy-5-methylbenzyl)-4-methylphenyl acrylate, and 3,9-bis[2-[3-(3-t-butyl-4-hydroxy-5-methylphenyl)propionyloxy]-1,1-dimethylethyl]-2,4,8,10-tetraoxaspiro[5.5]undecane

Examples of a commercially available product of the hindered phenolic compound include "ADEKA STAB AO-80", "ADEKA STAB AO-60", "ADEKA STAB AO-50", "ADEKA STAB AO-40", "ADEKA STAB AO-30", "ADEKA STAB AO-20", "ADEKA STAB AO-330" (all manufactured by ADEKA Corporation), "Irganox 1010", "Irganox 245", "Irganox 1076", "Irganox 1520" (all manufactured by BASF Japan Ltd.), and "Sumilizer GA-80", "Sumilizer GM", and "Sumilizer GS" (all manufactured by Sumitomo Chemical Co., Ltd.).

The hindered phenolic compound may be used alone or in combination of two or more kinds thereof.

The content of the phenolic compound contained in the charge transport layer is, for example, preferably 0.1% by mass or more and 20% by mass or less, more preferably 0.5% by mass or more and 10% by mass or less, and still more preferably 1% by mass or more and 5% by mass or less with respect to the total mass of the charge transport layer.

In the charge transport layer, for example, a proportion of the fluororesin particles in the layer is preferably 5% by mass or less, more preferably 1% by mass or less, and still more preferably 0% by mass (that is, the charge transport layer does not contain the fluororesin particles).

Since there is a high possibility that the regulations on manufacturing and use of the organic fluorine compounds are strengthened in the future, for example, a content of the fluororesin particles is preferably within the above-described range.

-Relative Permittivity of Charge Transport Layer-

The relative permittivity of the charge transport layer is, for example, preferably 3.0 or more and 5.0 or less, more preferably 3.0 or more and 4.0 or less, and still more preferably 3.1 or more and 3.3 or less.

**In** a case where the relative permittivity of the charge transport layer is 3.0 or more, for example, the ratio of the relative permittivity of the charge transport layer to the relative permittivity of the undercoat layer is in a preferable range, and thus the potential variation after the formation of the electrostatic latent image is easily suppressed.

**In** a case where the relative permittivity of the charge transport layer is 5.0 or less, the ratio of the relative permittivity of the charge transport layer to the relative permittivity of the undercoat layer is prevented from becoming excessively large, and the potential variation after the formation of the electrostatic latent image is easily suppressed.

In a case where the relative permittivity of the charge transport layer satisfies the above-described range, the chargeability of the photoreceptor is increased.

As a method of setting the relative permittivity of the charge transport layer within the above-described range, there is a method of controlling the relative permittivity depending on the structure of the resin to be used. For example, in a case where a structure containing a large number of aromatic rings or a structure having a small twist is used, the molecules tend to stack, and the dielectric constant tends to increase. In addition, a method of mixing a plurality of kinds of resins to obtain an intermediate value of the relative permittivity is also shown as an example.

-Ratio of Relative Permittivity of Charge Transport Layer to Relative Permittivity of Undercoat Layer-

The ratio of the relative permittivity of the charge transport layer to the relative permittivity of the undercoat layer (the relative permittivity of the charge transport layer/the relative permittivity of the undercoat layer) is, for example, preferably 0.010 or more and 0.400 or less, more preferably 0.02 or more and 0.2 or less, and still more preferably 0.03 or more and 0.1 or less.

In a case where the ratio of the relative permittivity of the charge transport layer to the relative permittivity of the undercoat layer is 0.01 or more, for example, the relative permittivity of the undercoat layer with respect to the charge transport layer is a value in a preferred range, and the voltage of the undercoat layer is excessively lowered in order to increase the voltage of the charge transport layer, which prevents a potential variation after the electrostatic latent image formation.

In a case where the ratio of the relative permittivity of the charge transport layer to the relative permittivity of the undercoat layer is 0.40 or less, for example, the relative permittivity of the undercoat layer is in a preferred range, a decrease in voltage applied to the charge transport layer is suppressed, and a potential variation after the formation of the electrostatic latent image is easily suppressed.

In the photoreceptor, in a case where the ratio of the relative permittivity of the charge transport layer to the

relative permittivity of the undercoat layer satisfies the above-described range, the dielectric constant of the undercoat layer increases, and the voltage applied to the charge transport layer increases. As a result, the potential variation after the formation of the electrostatic latent image is suppressed.

The relative permittivity of the charge transport layer and the relative permittivity of the undercoat layer are measured as follows.

First, the electrostatic capacity ($C_{CT}$) of the charge transport layer and the electrostatic capacity (Cuc) of the undercoat layer are measured and calculated by the following method.

An Au electrode having a radius of 3 mm is formed on the surface of a sample (that is, a sample in a state where an undercoat layer, a charge generation layer, and a charge transport layer are laminated on a conductive substrate) cut out from a photoreceptor to be measured in an appropriate size as a counter electrode by a vacuum vapor deposition method, and the electrostatic capacity at an alternating current frequency of 1 Hz is measured with an impedance analyzer in a state where a direct current voltage (DC voltage) of 10 V and an alternating current voltage (AC voltage) of 2 V are applied to the undercoat layer from the conductive substrate material and the Au electrode. This electrostatic capacity is denoted by $C_T$.

Subsequently, the charge transport layer and the charge generation layer are removed from the sample with a solvent, and the undercoat layer single layer is attached to the conductive substrate. In this state, an Au electrode having a radius of 3 mm is formed on the surface of the undercoat layer, and the electrostatic capacity of the undercoat layer at an alternating current frequency of 1 Hz is measured with an impedance analyzer in a state where a direct current voltage (DC voltage) of 10 V and an alternating current voltage (AC voltage) of 2 V are applied from the conductive substrate material and the Au electrode to the undercoat layer. The electrostatic capacity of the undercoat layer is denoted by Cuc.

The electrostatic capacity $C_{CT}$ of the charge transport layer is obtained from the electrostatic capacity $C_T$ and the electrostatic capacity Cuc of the undercoat layer by the following expression.

$$\text{Expression: } C_{CT} = (C_T \times C_{UC})/(C_{UC} - C_T)$$

From the values of the electrostatic capacity $C_{CT}$ of the charge transport layer and the electrostatic capacity Cuc of the undercoat layer, the relative permittivity of the charge transport layer and the undercoat layer is calculated according to the following expression using the dielectric constant of vacuum, the area of the Au electrode, and the film thickness of each layer.

$$\text{Expression: Relative permittivity of target layer} = (C/S \times d)/\varepsilon_0$$

In the expression, C is the electrostatic capacity (F) of the target layer, S is the Au electrode ($m^2$), d is the film thickness (m) of the target layer, and $\varepsilon_0$ is the dielectric constant of vacuum (= $8.854 \times 10^{-12}$).

-Film Thickness of Each Layer-

The film thickness of the undercoat layer is measured by cutting the film with a cutter knife or the like in a state where the undercoat layer is formed as a single film, exposing the conductive substrate, and measuring the depth of the exposed portion with a roughness meter.

The film thickness of the charge transport layer is calculated by cutting each layer provided below the charge transport layer with a cutter knife to expose the conductive substrate, measuring the depth of the exposed portion with a roughness meter, and subtracting the film thickness of the undercoat layer from the film thickness of each layer provided below the charge transport layer.

The formation of the charge transport layer is not particularly limited, and a known formation method is used. For example, the charge transport layer is obtained by forming a coating film of a coating solution for forming a charge transport layer, which is obtained by adding the above-described components to a solvent, drying the coating film, and heating the coating film as necessary.

Examples of the solvent for preparing the coating solution for forming the charge transport layer include typical organic solvents such as aromatic hydrocarbons such as benzene, toluene, xylene, and chlorobenzene; ketones such as acetone and 2-butanone; halogenated aliphatic hydrocarbons such as methylene chloride, chloroform, and ethylene chloride; and cyclic or linear ethers such as tetrahydrofuran and ethyl ether. The solvents are used alone or in a form of a mixture of two or more kinds thereof.

Examples of the coating method of coating the charge generation layer with the coating solution for forming the charge transport layer include typical methods such as a blade coating method, a wire bar coating method, a spray coating method, a dip coating method, a bead coating method, an air knife coating method, and a curtain coating method.

A film thickness of the charge transport layer is set to, for example, preferably in a range of 5 μm or more and 50

μm or less and more preferably in a range of 10 μm or more and 30 μm or less.

<Image Forming Apparatus and Process Cartridge>

An image forming apparatus according to the present exemplary embodiment includes the electrophotographic photoreceptor, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, a transfer device that transfers the toner image to a surface of a recording medium, and a cleaning device that cleans the surface of the electrophotographic photoreceptor. Further, the electrophotographic photoreceptor according to the present exemplary embodiment is employed as the electrophotographic photoreceptor.

In the image forming apparatus according to the present exemplary embodiment, the cleaning device has a cleaning blade that comes into contact with an outer peripheral surface of the photoreceptor, and cleans a surface of the photoreceptor after transfer of the toner image and before charging by the cleaning blade.

As the image forming apparatus according to the present exemplary embodiment, known image forming apparatuses such as an apparatus including a fixing device that fixes a toner image transferred to the surface of a recording medium; a direct transfer type apparatus that transfers a toner image formed on the surface of an electrophotographic photoreceptor directly to a recording medium; an intermediate transfer type apparatus that primarily transfers a toner image formed on the surface of an electrophotographic photoreceptor to the surface of an intermediate transfer member and secondarily transfers the toner image transferred to the surface of the intermediate transfer member to the surface of a recording medium; an apparatus including a charge erasing device that erases the charges on the surface of the electrophotographic photoreceptor by applying the charge erasing light after the transfer of the toner image and before the charging; and an apparatus including an electrophotographic photoreceptor heating member for increasing the temperature of an electrophotographic photoreceptor and decreasing the relative temperature are employed.

In a case of the intermediate transfer-type apparatus, for example, the transfer device has a configuration including an intermediate transfer member with a surface on which the toner image will be transferred, a primary transfer device that performs primary transfer to transfer the toner image formed on the surface of the electrophotographic photoreceptor to the surface of the intermediate transfer member, and a secondary transfer device that performs secondary transfer to transfer the toner image transferred to the surface of the intermediate transfer member to the surface of a recording medium.

The image forming apparatus according to the present exemplary embodiment may be any of a dry development type image forming apparatus or a wet development type (development type using a liquid developer) image forming apparatus.

In the image forming apparatus according to the present exemplary embodiment, for example, the portion including the electrophotographic photoreceptor may have a cartridge structure (process cartridge) that is attachable to and detachable from the image forming apparatus. As the process cartridge, for example, a process cartridge including the electrophotographic photoreceptor according to the present exemplary embodiment is preferably used. The process cartridge may include, for example, at least one selected from the group consisting of a charging device, an electrostatic latent image forming device, a developing device, and a transfer device in addition to the electrophotographic photoreceptor.

Hereinafter, an example of the image forming apparatus according to the present exemplary embodiment will be described, but the present exemplary embodiment is not limited thereto. Further, main parts shown in the figures will be described, but description of other parts will not be provided.

Fig. 2 is a schematic configuration view showing a configuration of an example of the image forming apparatus according to the present exemplary embodiment.

As shown in Fig. 2, an image forming apparatus 100 according to the present exemplary embodiment includes a process cartridge 300 including an electrophotographic photoreceptor 7, an exposure device 9 (an example of the electrostatic latent image forming device), a transfer device 40 (primary transfer device), and an intermediate transfer member 50. In the image forming apparatus 100, the exposure device 9 is disposed at a position that can be exposed to the electrophotographic photoreceptor 7 from an opening portion of the process cartridge 300, the transfer device 40 is disposed at a position that faces the electrophotographic photoreceptor 7 via the intermediate transfer member 50, and the intermediate transfer member 50 is disposed such that a part of the intermediate transfer member 50 is in contact with the electrophotographic photoreceptor 7. Although not shown, the image forming apparatus also includes a secondary transfer device that transfers the toner image transferred to the intermediate transfer member 50 to a recording medium (for example, paper). The intermediate transfer member 50, the transfer device 40 (primary transfer device), and the secondary transfer device (not shown) correspond to an example of the transfer device.

The process cartridge 300 in Fig. 2 integrally supports the electrophotographic photoreceptor 7, a charging

device 8 (an example of the charging device), a developing device 11 (an example of the developing device), and a cleaning device 13 (an example of the cleaning device) in a housing. The cleaning device 13 has a cleaning blade (an example of the cleaning member) 131, and a cleaning blade 131 is disposed to come into contact with the surface of the electrophotographic photoreceptor 7. The cleaning member may be a conductive or insulating fibrous member instead of the aspect of the cleaning blade 131, and may be used alone or in combination with the cleaning blade 131.

Fig. 2 shows an example of an image forming apparatus including a fibrous member 132 (roll shape) that supplies a lubricant 14 to the surface of the electrophotographic photoreceptor 7 and a fibrous member 133 (flat brush shape) that assists cleaning, but these are disposed as necessary.

Hereinafter, each configuration of the image forming apparatus according to the present exemplary embodiment will be described.

-Charging Device-

The charging device 8 may be a contact type charging device in which the charging member is in contact with the outer peripheral surface of the photoreceptor, or may be a non-contact type charging device in which the charging member is not in contact with the outer peripheral surface of the photoreceptor. An effect (the contamination of the charging member is unlikely to occur for a long period of time) obtained by the image forming apparatus according to the present exemplary embodiment is remarkable in the contact type charging device.

As the charging device 8, for example, a contact-type charging member formed of a conductive or semi-conductive charging roller, a charging brush, a charging film, a charging rubber blade, a charging tube, or the like is used. Further, known chargers such as a non-contact type roller charger, a scorotron charger using corona discharge, and a corotron charger are also used.

-Exposure Device-

Examples of the exposure device 9 include an optical system device that exposes the surface of the electrophotographic photoreceptor 7 to light such as a semiconductor laser beam, LED light, and liquid crystal shutter light in a predetermined image pattern. A wavelength of the light source is within the spectral sensitivity region of the electrophotographic photoreceptor. As a wavelength of a semiconductor laser, near infrared laser, which has an oscillation wavelength in the vicinity of 780 nm, is mostly used. However, the wavelength is not limited thereto, and a laser having an oscillation wavelength of an approximately 600 nm level or a laser having an oscillation wavelength of 400 nm or more and 450 nm or less as a blue laser may also be used. Further, a surface emission type laser light source capable of outputting a multi-beam is also effective for forming a color image.

-Developing Device-

Examples of the developing device 11 include a typical developing device that performs development in contact or non-contact with the developer. The developing device 11 is not particularly limited as long as the device has the above-described functions, and is selected depending on the purpose thereof. Examples thereof include known developing machines having a function of attaching a one-component developer or a two-component developer to the electrophotographic photoreceptor 7 using a brush, a roller, or the like. Among these, for example, a developing device formed of a developing roller having a surface on which a developer is held is preferably used.

The developer used in the developing device 11 may be a one-component developer containing only a toner or a two-component developer containing a toner and a carrier. Further, the developer may be magnetic or non-magnetic. Known developers are employed as these developers.

-Cleaning Device-

As the cleaning device 13, a cleaning blade type device including the cleaning blade 131 is used. In addition to the cleaning blade type device, a fur brush cleaning type device or a simultaneous development cleaning type device may be employed.

-Transfer Device-

Examples of the transfer device 40 include transfer chargers known per se such as a contact-type transfer charger formed of a belt, a roller, a film, and a rubber blade, a scorotron transfer charger using corona discharge, and a corotron transfer charger.

-Intermediate Transfer Member-

As the intermediate transfer member 50, a semi-conductive belt-like intermediate transfer member (intermediate transfer belt) containing polyimide, polyamide-imide, polycarbonate, polyarylate, polyester, rubber, or the like is used. Further, as the form of the intermediate transfer member, a drum-like intermediate transfer member may be used in addition to the belt-like intermediate transfer member.
Fig. 3 is a schematic configuration view showing a configuration of another example of the image forming apparatus according to the present exemplary embodiment.
An image forming apparatus 120 shown in Fig. 3 is a tandem type multicolor image forming apparatus in which four process cartridges 300 are mounted. The image forming apparatus 120 is configured such that four process cartridges 300 are arranged in parallel on the intermediate transfer member 50, and one electrophotographic photoreceptor is used for each color. The image forming apparatus 120 has the same configuration as the image forming apparatus 100 except that the image forming apparatus 120 is of a tandem type.

Examples

Hereinafter, exemplary embodiments of the invention will be described in detail based on examples, but the exemplary embodiments of the invention are not limited to the examples.
In the following description, "parts" and "%" are on a mass basis unless otherwise specified.
In the following description, the synthesis, the treatment, the production, and the like are carried out at room temperature (25°C ± 3°C) unless otherwise specified.

<Example 1>

[Formation of Undercoat Layer]

100 parts of zinc oxide particles (average particle diameter of 70 nm, specific surface area of 15 $m^2/g$, manufactured by Tayca Corporation) is stirred and mixed with 500 parts of toluene, 1.3 parts of a silane coupling agent (trade name: KBM603, manufactured by Shin-Etsu Chemical Co., Ltd., N-2-(aminoethyl)-3-aminopropyltrimethoxysilane) is added thereto, and the mixture is stirred for 2 hours. Thereafter, toluene is distilled off under reduced pressure and baked at 120°C for 3 hours to obtain zinc oxide particles subjected to a surface treatment with a silane coupling agent.
110 parts of the surface-treated zinc oxide particles are stirred and mixed with 500 parts of tetrahydrofuran, and a solution obtained by dissolving 0.6 parts of the above-described compound (A) in 50 parts of tetrahydrofuran is added thereto as an electron-accepting compound, and the mixture is stirred at 50°C for 5 hours. Thereafter, the solid content is separated by filtration under reduced pressure, and the resultant is dried under reduced pressure at 60°C to obtain electron-accepting compound-imparted zinc oxide particles.
100 parts of a solution obtained by dissolving 60 parts of the electron-accepting compound-imparted zinc oxide particles, 13.5 parts of a curing agent (blocked isocyanate, trade name: SUMIDUR 3175, manufactured by Sumitomo Bayer Urethane Co., Ltd.), and 15 parts of a butyral resin (trade name: S-LEC BM-1, manufactured by Sekisui Chemical Co., Ltd.) in 68 parts of methyl ethyl ketone is mixed with 5 parts of methyl ethyl ketone, and the solution is dispersed in a sand mill for 2 hours using 1 mmφ glass beads, thereby obtaining a dispersion liquid. 0.005 part of dioctyltin dilaurate as a catalyst and 4 parts of silicone resin particles (trade name: TOSPEARL 145, manufactured by Momentive Performance Materials Inc.) are added to the dispersion liquid, thereby obtaining a coating solution for forming an undercoat layer. The outer peripheral surface of the conductive substrate is coated with the coating solution for forming an undercoat layer by a dip coating method, and dried and cured at 170°C for 40 minutes to form an undercoat layer with a film thickness of 23.5 μm.

[Formation of Charge Generation Layer]

A mixture of 15 parts of hydroxygallium phthalocyanine as a charge generation material (having diffraction peaks at positions where Bragg angles (2θ ± 0.2°) in the X-ray diffraction spectrum using Cukα characteristic X-rays are at least of 7.5°, 9.9°, 12.5, 16.3°, 18.6°, 25.1°, and 28.3°), 10 parts of a vinyl chloride-vinyl acetate copolymer resin (trade name: VMCH, manufactured by Nippon Unicar Company Limited) as a binder resin, and 200 parts of n-butyl acetate is dispersed in a sand mill for 4 hours using glass beads with a diameter of 1 mm. 175 parts of n-butyl acetate and 180 parts of methyl ethyl ketone are added to the dispersion liquid, and the mixture is stirred to obtain a coating solution for forming a charge generation layer. The undercoat layer is dipped and coated with the coating solution for forming a charge generation layer, and dried at room temperature (25°C ± 3°C) to form a charge generation layer having a film thickness of 0.18 μm.

[Formation of Charge Transport Layer]

35 parts of the following polyarylate resin (PA1) and 24 parts of the following polycarbonate resin (PC1) as a binder resin, and 28.7 parts of CTM-1 and 12.3 parts of CTM-2 as a charge transport material are dissolved in 270 parts of tetrahydrofuran and 30 parts of toluene to obtain a coating solution for forming a charge transport layer. The charge generation layer is dipped and coated with the coating solution for forming a charge transport layer, and dried at 143°C for 30 minutes to form a charge transport layer having a film thickness of 32 μm.

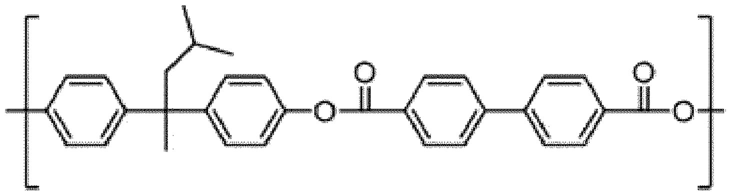

POLYARYLATE RESIN (PA1)

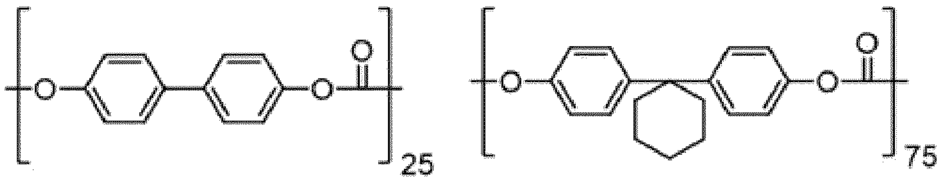

POLYCARBONATE RESIN (PC1)

The number attached to the constitutional unit represents a molar ratio.

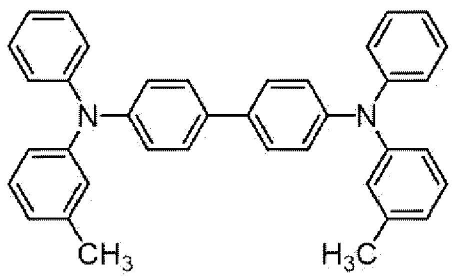

CTM-1

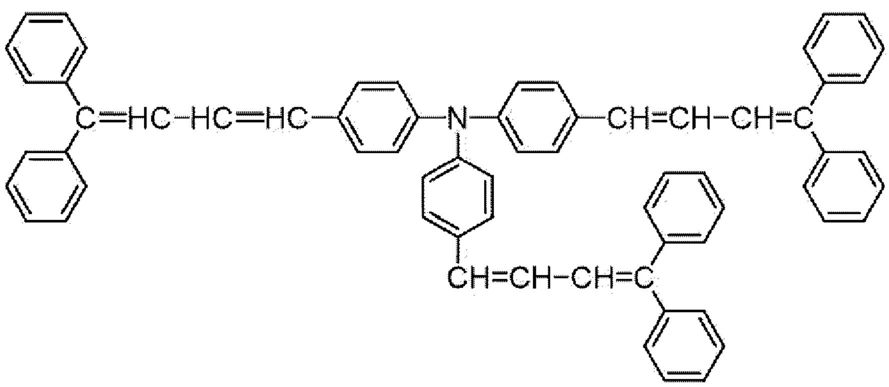

CTM-2

A photoreceptor is obtained through the above-described steps.

<Example 2>

A photoreceptor is obtained in the same manner as in Example 1, except that, in the formation of the charge transport layer, the amount of the charge transport material is changed to 41.0 parts of CTM-1 alone.

<Example 3>

A photoreceptor is obtained in the same manner as in Example 1, except that, in the formation of the undercoat layer, the mass% of the electron-accepting compound-imparted zinc oxide particles is changed to 62% by mass.

<Example 4>

A photoreceptor is obtained in the same manner as in Example 1, except that, in the formation of the undercoat layer, the mass% of the electron-accepting compound-imparted zinc oxide particles is changed to 72% by mass.

<Example 5>

A photoreceptor is obtained in the same manner as in Example 1, except that in the formation of the charge transport layer, the ratio of the binder resin of the charge transport layer is changed to 17.7 parts of a polyarylate resin and 41.3 parts of a polycarbonate resin, and the charge transport material is changed to 44 parts of CTM-1 alone.

<Example 6>

A photoreceptor is obtained in the same manner as in Example 1, except that, in the formation of the charge transport layer, the binder resin of the charge transport layer is changed to 59.0 parts of a polyarylate resin alone, and 26.4 parts of CTM-1 and 11.3 parts of CTM-2 are used as the charge transport material.

<Example 7>

A photoreceptor is obtained in the same manner as in Example 1, except that in the formation of the charge transport layer, the binder resin of the charge transport layer is changed to 59.0 parts of a polyarylate resin (PA2) alone, in which the dicarboxylic acid unit is (A2-3) 50 mol% and the diol unit is (B4-3) 50 mol%.

<Examples 8 and 9>

A photoreceptor is obtained in the same manner as in Example 1, except that in the formation of the undercoat layer, the electron-accepting compound is changed to the compound shown in Table 1.

<Example 10>

A photoreceptor is obtained in the same manner as in Example 1, except that, in the formation of the undercoat layer, the mass% of the electron-accepting compound-imparted zinc oxide particles contained in the undercoat layer is changed to 75% by mass, in the formation of the charge transport layer, the ratio of the binder resin of the charge transport layer is changed to 17.7 parts of the polyarylate resin and 41.3 parts of the polycarbonate resin, and the charge transport material is changed to 44 parts of CTM-1 alone.

<Examples 11 to 14>

A photoreceptor is obtained in the same manner as in Example 1, except that the film thickness of the undercoat layer is changed as shown in Table 1 in the formation of the undercoat layer.

<Example 15>

A photoreceptor is obtained in the same manner as in Example 1, except that, in the formation of the charge transport layer, the polycarbonate resin of the charge transport layer is changed to the polycarbonate resin (PC3) shown below.

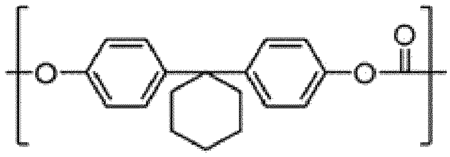

POLYCARBONATE RESIN (PC3)

<Example 16>

A photoreceptor is obtained in the same manner as in Example 1, except that in the formation of the charge transport layer, the polyarylate resin of the charge transport layer is changed to a polyarylate resin (PA3) in which the dicarboxylic acid unit is composed of (A3-2) 40 mol% and (A4-3) 10 mol% and the diol unit is composed of (B6-4) 50 mol%, and the polycarbonate resin is changed to the above-described polycarbonate resin (PC3).

<Example 17>

A photoreceptor is obtained in the same manner as in Example 1, except that in the formation of the charge transport layer, the polyarylate resin of the charge transport layer is changed to a polyarylate resin (PA4) in which the dicarboxylic acid unit is composed of (A3-2) 50 mol% and the diol unit is composed of (B4-4) 50 mol%, and the polycarbonate resin is changed to the above-described polycarbonate resin (PC3).

<Comparative Examples 1 and 4>

A photoreceptor is obtained in the same manner as in Example 1, except that in the formation of the undercoat layer, the electron-accepting compound is changed to the compound shown in Table 1.

<Comparative Example 2>

A photoreceptor is obtained in the same manner as in Example 1, except that, in the formation of the undercoat layer, the mass% of the electron-accepting compound-imparted zinc oxide particles is changed to 76%.

<Comparative Example 3>

A photoreceptor is obtained in the same manner as in Example 1, except that, in the formation of the charge transport layer, the binder resin of the charge transport layer is changed to 59 parts of a polycarbonate resin (PC1) alone.

<Comparative Example 5>

A photoreceptor is obtained in the same manner as in Example 1, except that, in the formation of the undercoat layer, the mass% of the electron-accepting compound-imparted zinc oxide particles contained in the undercoat layer is changed to 77%, and in the formation of the charge transport layer, the ratio of the binder resin of the charge transport layer is changed to 17.7 parts of the polyarylate resin and 41.3 parts of the polycarbonate resin.

<Comparative Example 6>

A photoreceptor is obtained in the same manner as in Example 1, except that, in the formation of the undercoat layer, the mass% of the electron-accepting compound-imparted zinc oxide particles contained in the undercoat layer is changed to 61%, in the formation of the charge transport layer, the binder resin of the charge transport layer is changed to 59 parts of the polyarylate resin (PA1) alone, and 26.4 parts of CTM-1 and 11.3 parts of CTM-2 are used as the charge transport materials.

<Various Measurements>

The following items are measured by the methods described above.

- · Electrostatic capacity of undercoat layer
- · Ratio of relative permittivity of charge transport layer to relative permittivity of undercoat layer

In the table, the notation "(Numerical value A)E - (Numerical value B)" indicates a value of (Numerical value A) × $10^{-(\text{Numerical value B})}$.

<Performance Evaluation of Photoreceptor>

[Potential Variation]

As follows, the potential variation of the photoreceptor of each example after the formation of the electrostatic latent image is evaluated.

The photoreceptor is mounted on an image forming apparatus (a modified apparatus of Apeos C7070 manufactured by FUJIFILM Business Innovation Corporation), a potential measurement probe is attached to a position of a developer, and potential variations in a case where a sequence of charging to 700 V and then exposure of 4 $mJ \cdot m^{-2}$ is repeated 6400 cycles in an environment of a processing speed of 350 nm/sec, a temperature of 30°C, and a humidity of 75% are classified as follows.

A: less than 15 V
B: 15 V or more and less than 17.5 V
C: 17.5 V or more and less than 20 V
D: 20 V or more and less than 22.5 V
E: 22.5 V or more and less than 25 V
F: 25 V or more and less than 27.5 V

[Table 1]

| Item | Charge transport layer: Binder resin | | | | | Charge transport layer: Charge transport material | | | | | Charge transport layer: Relative permittivity (A) | Undercoat layer: Amount of zinc oxide | Undercoat layer: Type of electron-accepting compound | Undercoat layer: Electrostatic capacitance | Undercoat layer: Relative permittivity (B) | Undercoat layer: Film thickness | Ratio of relative permittivity (A/B) | Potential variation |
|---|---|---|---|---|---|---|---|---|---|---|---|---|---|---|---|---|---|---|
| | - | Type of resin | Parts by mass | Type of resin | Parts by mass | - | Type of CTM | Parts by mass | Type of CTM | Parts by mass | - | % | - | F | - | μm | - | |
| Example 1 | PAR/PC | PA1 | 35.0 | PC1 | 24.0 | CTM-1/CTM-2 | CTM-1 | 28.7 | CTM-2 | 12.3 | 3.2 | 68% | Compound (A) | 8.5E-10 | 8.0E+01 | 23.5 | 0.0401 | A |
| Example 2 | PAR/PC | PA1 | 35.0 | PC1 | 24.0 | CTM-1 | CTM-1 | 41.0 | CTM-2 | - | 3.2 | 68% | Compound (A) | 8.5E-10 | 8.0E+01 | 23.5 | 0.0401 | A |
| Example 3 | PAR/PC | PA1 | 35.0 | PC1 | 24.0 | CTM-1/CTM-2 | CTM-1 | 28.7 | CTM-2 | 12.3 | 3.2 | 62% | Compound (A) | 1.0E-10 | 8.0E+01 | 23.5 | 0.0401 | D |
| Example 4 | PAR/PC | PA1 | 35.0 | PC1 | 24.0 | CTM-1/CTM-2 | CTM-1 | 28.7 | CTM-2 | 12.3 | 3.2 | 72% | Compound (A) | 2.0E-09 | 2.8E+02 | 23.5 | 0.0114 | D |
| Comparative Example 1 | PAR/PC | PA1 | 35.0 | PC1 | 24.0 | CTM-1/CTM-2 | CTM-1 | 28.7 | CTM-2 | 12.3 | 3.2 | 68% | Alizarin | 9.8E-11 | 9.2E+00 | 23.5 | 0.3478 | E |
| Comparative Example 2 | PAR/PC | PA1 | 35.0 | PC1 | 24.0 | CTM-1/CTM-2 | CTM-1 | 28.7 | CTM-2 | 12.3 | 3.2 | 76% | Compound (A) | 3.5E-09 | 3.3E+02 | 23.5 | 0.0097 | E |
| Example 5 | PAR/PC | PA1 | 17.7 | PC1 | 41.3 | CTM-1 | CTM-1 | 44.0 | CTM-2 | - | 3.0 | 68% | Compound (A) | 8.5E-10 | 8.0E+01 | 23.5 | 0.0376 | C |
| Example 6 | PAR | PA1 | 59.0 | - | - | CTM-1/CTM-2 | CTM-1 | 26.4 | CTM-2 | 11.3 | 5.0 | 68% | Compound (A) | 8.5E-10 | 8.0E+01 | 23.5 | 0.0627 | B |
| Comparative Example 3 | PC | - | - | PC1 | 59.0 | CTM-1/CTM-2 | CTM-1 | 28.7 | CTM-2 | 12.3 | 2.9 | 68% | Compound (A) | 8.5E-10 | 8.0E+01 | 23.5 | 0.0363 | E |
| Example 7 | PAR | PA2 | 59.0 | - | - | CTM-1/CTM-2 | CTM-1 | 28.7 | CTM-2 | 12.3 | 3.2 | 68% | Compound (A) | 8.5E-10 | 8.0E+01 | 23.5 | 0.0401 | C |
| Example 8 | PAR/PC | PA1 | 35.0 | PC1 | 24.0 | CTM-1/CTM-2 | CTM-1 | 28.7 | CTM-2 | 12.3 | 3.2 | 68% | Purpurin | 6.5E-10 | 6.1E+01 | 23.5 | 0.0524 | B |
| Example 9 | PAR/PC | PA1 | 35.0 | PC1 | 24.0 | CTM-1/CTM-2 | CTM-1 | 28.7 | CTM-2 | 12.3 | 3.2 | 68% | Quinizarin | 5.5E-10 | 5.2E+01 | 23.5 | 0.0620 | B |
| Comparative Example 4 | PAR/PC | PA1 | 35.0 | PC1 | 24.0 | CTM-1/CTM-2 | CTM-1 | 28.7 | CTM-2 | 12.3 | 3.2 | 68% | Anthraquinone | 9.0E-11 | 8.4E+00 | 23.5 | 0.3788 | F |
| Example 10 | PAR/PC | PA1 | 17.7 | PC1 | 41.3 | CTM-1 | CTM-1 | 44.0 | CTM-2 | - | 3.0 | 75% | Compound (A) | 2.5E-09 | 3.3E+02 | 23.5 | 0.0091 | D |
| Comparative Example 5 | PAR/PC | PA1 | 17.7 | PC1 | 41.3 | CTM-1 | CTM-1 | 44.0 | CTM-2 | - | 3.0 | 77% | Compound (A) | 4.0E-09 | 4.1E+02 | 23.5 | 0.0074 | F |
| Comparative Example 6 | PAR | PA1 | 59.0 | - | - | CTM-1/CTM-2 | CTM-1 | 26.4 | CTM-2 | 11.3 | 5.0 | 61% | Compound (A) | 9.0E-11 | 9.4E+00 | 23.5 | 0.5326 | F |
| Example 11 | PAR/PC | PA1 | 35.0 | PC1 | 24.0 | CTM-1/CTM-2 | CTM-1 | 28.7 | CTM-2 | 12.3 | 3.2 | 68% | Compound (A) | 1.2E-09 | 8.0E+01 | 17.0 | 0.0401 | B |
| Example 12 | PAR/PC | PA1 | 35.0 | PC1 | 24.0 | CTM-1/CTM-2 | CTM-1 | 28.7 | CTM-2 | 12.3 | 3.2 | 68% | Compound (A) | 5.7E-10 | 8.0E+01 | 35.0 | 0.0401 | B |
| Example 13 | PAR/PC | PA1 | 35.0 | PC1 | 24.0 | CTM-1/CTM-2 | CTM-1 | 28.7 | CTM-2 | 12.3 | 3.2 | 68% | Compound (A) | 1.3E-09 | 8.0E+01 | 15.0 | 0.0401 | D |
| Example 14 | PAR/PC | PA1 | 35.0 | PC1 | 24.0 | CTM-1/CTM-2 | CTM-1 | 28.7 | CTM-2 | 12.3 | 3.2 | 68% | Compound (A) | 5.4E-10 | 8.0E+01 | 37.0 | 0.0401 | D |
| Example 15 | PAR/PC | PA1 | 35.0 | PC3 | 24.0 | CTM-1/CTM-2 | CTM-1 | 28.7 | CTM-2 | 12.3 | 2.8 | 68% | Compound (A) | 8.5E-10 | 8.0E+01 | 23.5 | 0.0351 | C |
| Example 16 | PAR/PC | PA3 | 35.0 | PC3 | 24.0 | CTM-1/CTM-2 | CTM-1 | 28.7 | CTM-2 | 12.3 | 2.6 | 68% | Compound (A) | 8.5E-10 | 8.0E+01 | 23.5 | 0.0326 | D |
| Example 17 | PAR/PC | PA4 | 35.0 | PC3 | 24.0 | CTM-1/CTM-2 | CTM-1 | 28.7 | CTM-2 | 12.3 | 2.7 | 68% | Compound (A) | 8.5E-10 | 8.0E+01 | 23.5 | 0.0338 | D |

From the above results, the potential variation after the formation of the electrostatic latent image is suppressed in the photoreceptor of Examples as compared with the photoreceptor of Comparative Examples.

The present exemplary embodiments include the following aspects.

(((1))) An electrophotographic photoreceptor comprising:

a conductive substrate;
an undercoat layer disposed on the conductive substrate; and

a lamination-type photosensitive layer disposed on the undercoat layer and having a charge generation layer and a charge transport layer,
wherein the charge transport layer contains a charge transport material and a polyarylate resin,
the polyarylate resin contains a dicarboxylic acid unit represented by Formula (A) and a diol unit represented by Formula (B), and
an electrostatic capacity of the undercoat layer is $1.0 \times 10^{-10}$ F or more and $3.0 \times 10^{-9}$ F or less,

FORMULA (A)

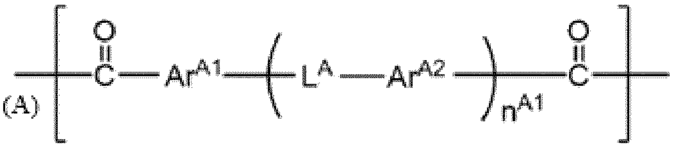

FORMULA (B)

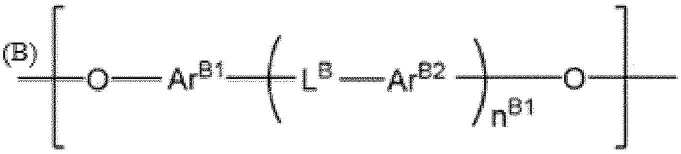

in Formula (A), $Ar^{A1}$ and $Ar^{A2}$ are each independently an aromatic ring which may have a substituent, $L^A$ is a single bond or a divalent linking group, and $n^{A1}$ is 0, 1, or 2,
in Formula (B), $Ar^{B1}$ and $Ar^{B2}$ are each independently an aromatic ring which may have a substituent, $L^B$ is a single bond, an oxygen atom, a sulfur atom, or $-C(Rb^1)(Rb^2)-$, and $n^{B1}$ is 0, 1, or 2, where $Rb^1$ and $Rb^2$ are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and $Rb^1$ and $Rb^2$ may be bonded to each other to form a cyclic alkyl group.

(((2))) The electrophotographic photoreceptor according to (((1))),
wherein the charge transport layer has a relative permittivity of 3.0 or more and 5.0 or less.
(((3))) The electrophotographic photoreceptor according to (((1))) or (((2))),
wherein a ratio of a relative permittivity of the charge transport layer to a relative permittivity of the undercoat layer (a relative permittivity of the charge transport layer/a relative permittivity of the undercoat layer) is 0.010 or more and 0.400 or less.
(((4))) The electrophotographic photoreceptor according to any one of (((1))) to (((3))),
wherein the undercoat layer contains zinc oxide particles to which an electron-accepting compound is applied, in an amount of 62% by mass or more and 75% by mass or less with respect to the undercoat layer.
(((5))) The electrophotographic photoreceptor according to (((4))),
wherein the electron-accepting compound is an anthraquinone derivative having three OH groups or having two OH groups and one alkoxy group.
(((6))) The electrophotographic photoreceptor according to (((5))),
wherein the anthraquinone derivative is an alizarin derivative represented by Formula (C),

FORMULA (C)

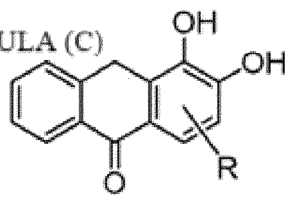

in Formula (C), R represents a hydroxyl group or an alkoxy group having 1 or more and 10 or less of carbon atoms.
(((7))) The electrophotographic photoreceptor according to any one of (((1))) to (((6))),
wherein a film thickness of the undercoat layer is 17 μm or more and 35 μm or less.
(((8))) The electrophotographic photoreceptor according to any one of (((1))) to (((7))),

wherein the charge transport layer further contains a polycarbonate resin, and
the polyarylate resin and a polycarbonate resin each have a constitutional unit including biphenyl represented by Formula (BP),

FORMULA (BP) 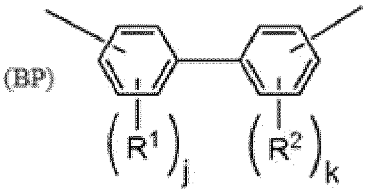

in Formula (BP), j is an integer of 0 or greater and 4 or less, j pieces of $R^1$'s are each independently a methyl group or an ethyl group, k is an integer of 0 or greater and 4 or less, and k pieces of $R^2$'s are each independently a methyl group or an ethyl group.

(((9))) A process cartridge comprising:

the electrophotographic photoreceptor according to any one of (((1))) to (((8))),
wherein the process cartridge is attachable to and detachable from an image forming apparatus.

(((10))) An image forming apparatus comprising:

the electrophotographic photoreceptor according to any one of (((1))) to (((8)));
a charging unit that charges a surface of the electrophotographic photoreceptor;
an electrostatic latent image forming unit that forms an electrostatic latent image on the charged surface of the electrophotographic photoreceptor;
a developing unit that develops the electrostatic latent image formed on the surface of the electrophotographic photoreceptor with a developer containing a toner to form a toner image; and
a transfer unit that transfers the toner image to a surface of a recording medium.

The effects of the above-described aspects are as follows.

According to (((1))), there is provided an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and a potential variation after formation of an electrostatic latent image is suppressed as compared with a case where an electrostatic capacity of the undercoat layer is less than $1.0 \times 10^{-10}$ F or more than $3.0 \times 10^{-9}$ F.

According to (((2))), there is provided an electrophotographic photoreceptor in which a potential variation after the formation of an electrostatic latent image is suppressed, as compared with a case where the relative permittivity of the charge transport layer is less than 3.0 or more than 5.0.

According to (((3))), there is provided an electrophotographic photoreceptor in which a potential variation after the formation of an electrostatic latent image is suppressed, as compared with a case where a ratio of a relative permittivity of the charge transport layer to a relative permittivity of the undercoat layer (a relative permittivity of the charge transport layer/a relative permittivity of the undercoat layer) is less than 0.010 or more than 0.400.

According to (((4))), there is provided an electrophotographic photoreceptor in which a potential variation after the formation of an electrostatic latent image is suppressed, as compared with a case where the undercoat layer contains the zinc oxide particles to which the electron-accepting compound is applied in an amount of less than 62% by mass or more than 75% by mass.

According to (((5))), there is provided an electrophotographic photoreceptor in which a potential variation after the formation of an electrostatic latent image is suppressed, as compared with a case where the electron-accepting compound is an anthraquinone derivative which does not have three OH groups or does not have two OH groups and one alkoxy group.

According to (((6))), there is provided an electrophotographic photoreceptor in which a potential variation after the formation of an electrostatic latent image is suppressed, as compared with a case where the anthraquinone derivative is an alizarin derivative that does not satisfy the configuration represented by Formula (C).

According to (((7))), there is provided an electrophotographic photoreceptor in which a potential variation after formation of an electrostatic latent image is suppressed, as compared with a case where the film thickness of the undercoat layer is less than 17 $\mu$m or more than 35 $\mu$m.

According to (((8))), there is provided an electrophotographic photoreceptor in which a potential variation after the formation of an electrostatic latent image is suppressed, as compared with a case where each of the polyarylate resin and the polycarbonate resin does not have the constitutional unit including biphenyl.

According to (((9))) or (((10))), there is provided a process cartridge or an image forming apparatus which include an electrophotographic photoreceptor including a conductive substrate, an undercoat layer disposed on the conductive substrate, and a lamination-type photosensitive layer disposed on the undercoat layer and having a charge generation layer and a charge transport layer, in which the charge transport layer contains a charge transport material and a polyarylate resin, the polyarylate resin contains a dicarboxylic acid unit represented by Formula (A) and a diol unit represented by Formula (B), and a potential variation after formation of an electrostatic latent image is suppressed as compared with a case where an electrostatic capacity of the undercoat layer is less than $1.0 \times 10^{-10}$ F or more than $3.0 \times 10^{-9}$ F.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

Brief Description of the Reference Symbols

1: conductive substrate
2: undercoat layer
3: charge generation layer
4: charge transport layer
5: photosensitive layer
10A: photoreceptor
7: electrophotographic photoreceptor
8: charging device
9: exposure device
11: developing device
13: cleaning device
14: lubricant
40: transfer device
50: intermediate transfer member
100: image forming apparatus
120: image forming apparatus
131: cleaning blade
132: fibrous member (roll shape)
133: fibrous member (flat brush shape)
300: process cartridge

## Claims

**1.** An electrophotographic photoreceptor comprising:

a conductive substrate;
an undercoat layer disposed on the conductive substrate; and
a lamination-type photosensitive layer disposed on the undercoat layer and having a charge generation layer and a charge transport layer,
wherein the charge transport layer contains a charge transport material and a polyarylate resin,
the polyarylate resin contains a dicarboxylic acid unit represented by Formula (A) and a diol unit represented by Formula (B), and
an electrostatic capacity of the undercoat layer is $1.0 \times 10^{-10}$ F or more and $3.0 \times 10^{-9}$ F or less,

FORMULA (A)

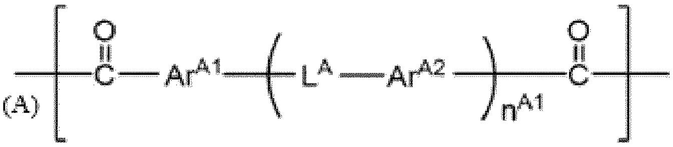

FORMULA (B)

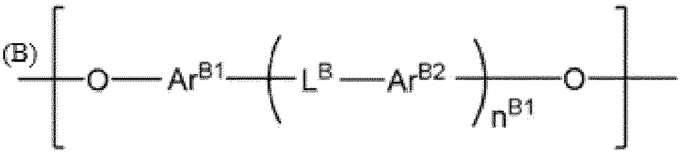

in Formula (A), $Ar^{A1}$ and $Ar^{A2}$ are each independently an aromatic ring which may have a substituent, $L^A$ is a single bond or a divalent linking group, and $n^{A1}$ is 0, 1, or 2,
in Formula (B), $Ar^{B1}$ and $Ar^{B2}$ are each independently an aromatic ring which may have a substituent, $L^B$ is a single bond, an oxygen atom, a sulfur atom, or $-C(Rb^1)(Rb^2)-$, and $n^{B1}$ is 0, 1, or 2, where $Rb^1$ and $Rb^2$ are each independently a hydrogen atom, an alkyl group having 1 or more and 20 or less carbon atoms, an aryl group having 6 or more and 12 or less carbon atoms, or an aralkyl group having 7 or more and 20 or less carbon atoms, and $Rb^1$ and $Rb^2$ may be bonded to each other to form a cyclic alkyl group.

**2.** The electrophotographic photoreceptor according to claim 1,
wherein the charge transport layer has a relative permittivity of 3.0 or more and 5.0 or less.

**3.** The electrophotographic photoreceptor according to claim 1 or 2,
wherein a ratio of a relative permittivity of the charge transport layer to a relative permittivity of the undercoat layer (a relative permittivity of the charge transport layer/a relative permittivity of the undercoat layer) is 0.010 or more and 0.400 or less.

**4.** The electrophotographic photoreceptor according to any one of claims 1 to 3,
wherein the undercoat layer contains zinc oxide particles to which an electron-accepting compound is applied, in an amount of 62% by mass or more and 75% by mass or less with respect to the undercoat layer.

**5.** The electrophotographic photoreceptor according to claim 4,
wherein the electron-accepting compound is an anthraquinone derivative having three OH groups or having two OH groups and one alkoxy group.

**6.** The electrophotographic photoreceptor according to claim 5,
wherein the anthraquinone derivative is an alizarin derivative represented by Formula (C),

FORMULA (C)

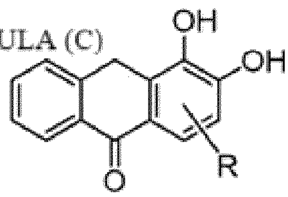

in Formula (C), R represents a hydroxyl group or an alkoxy group having 1 or more and 10 or less of carbon atoms.

**7.** The electrophotographic photoreceptor according to any one of claims 1 to 6,
wherein a film thickness of the undercoat layer is 17 μm or more and 35 μm or less.

**8.** The electrophotographic photoreceptor according to any one of claims 1 to 7,

wherein the charge transport layer further contains a polycarbonate resin, and
the polyarylate resin and a polycarbonate resin each have a constitutional unit including biphenyl represented by Formula (BP),

FORMULA (BP)

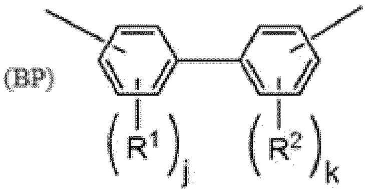

in Formula (BP), j is an integer of 0 or greater and 4 or less, j pieces of $R^1$'s are each independently a methyl group or an ethyl group, k is an integer of 0 or greater and 4 or less, and k pieces of $R^2$'s are each independently a methyl group or an ethyl group.

**9.** A process cartridge comprising:

the electrophotographic photoreceptor according to any one of claims 1 to 8,
wherein the process cartridge is attachable to and detachable from an image forming apparatus.

**10.** An image forming apparatus comprising:

the electrophotographic photoreceptor according to any one of claims 1 to 8;
a charging unit that charges a surface of the electrophotographic photoreceptor;
an electrostatic latent image forming unit that forms an electrostatic latent image on the charged surface of the electrophotographic photoreceptor;
a developing unit that develops the electrostatic latent image formed on the surface of the electrophotographic photoreceptor with a developer containing a toner to form a toner image; and
a transfer unit that transfers the toner image to a surface of a recording medium.

FIG. 1

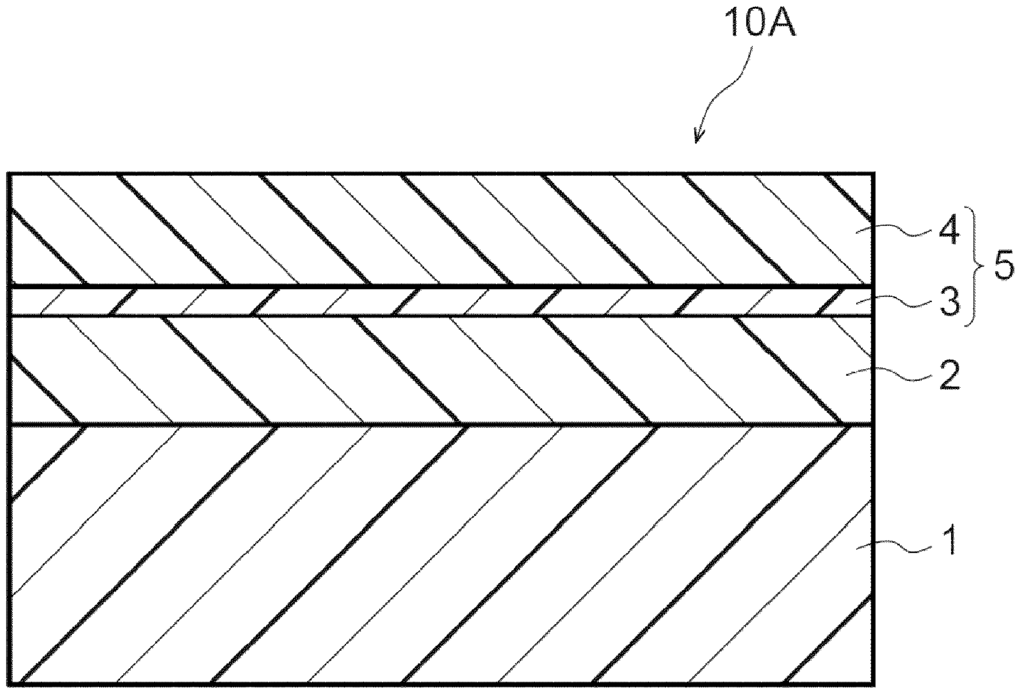


FIG. 2

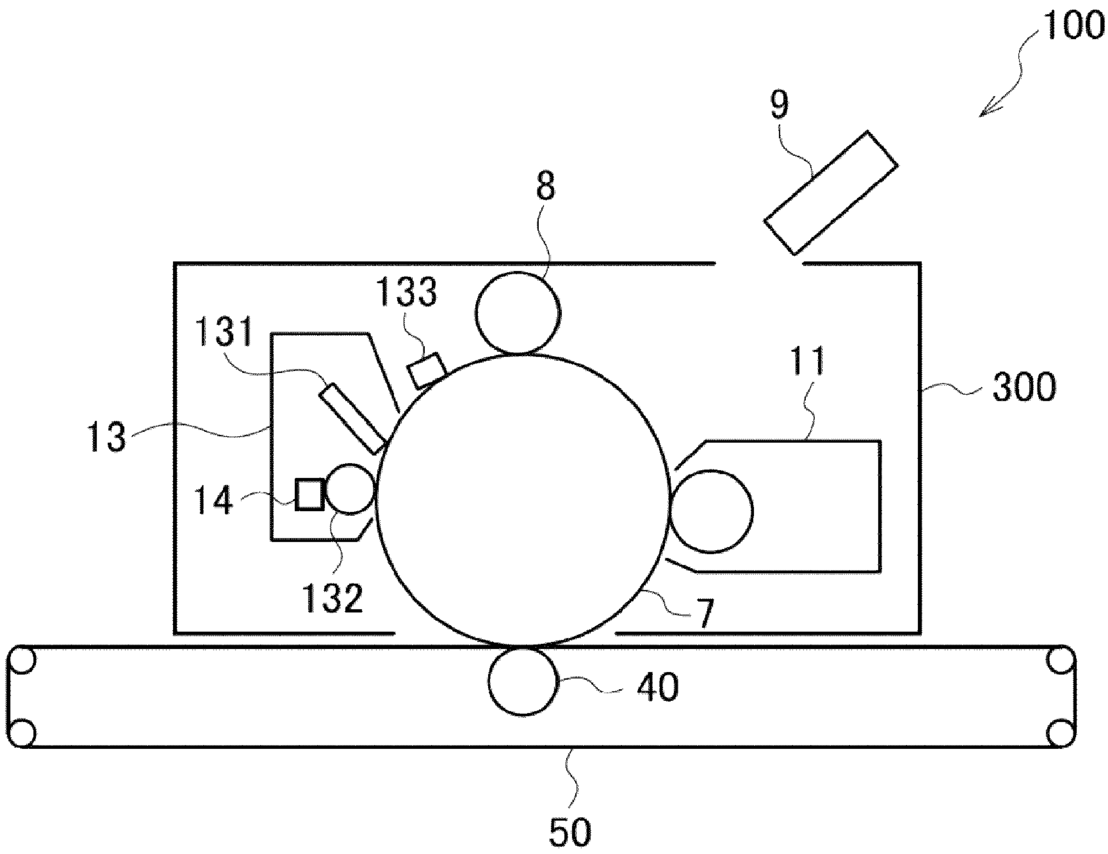

FIG. 3

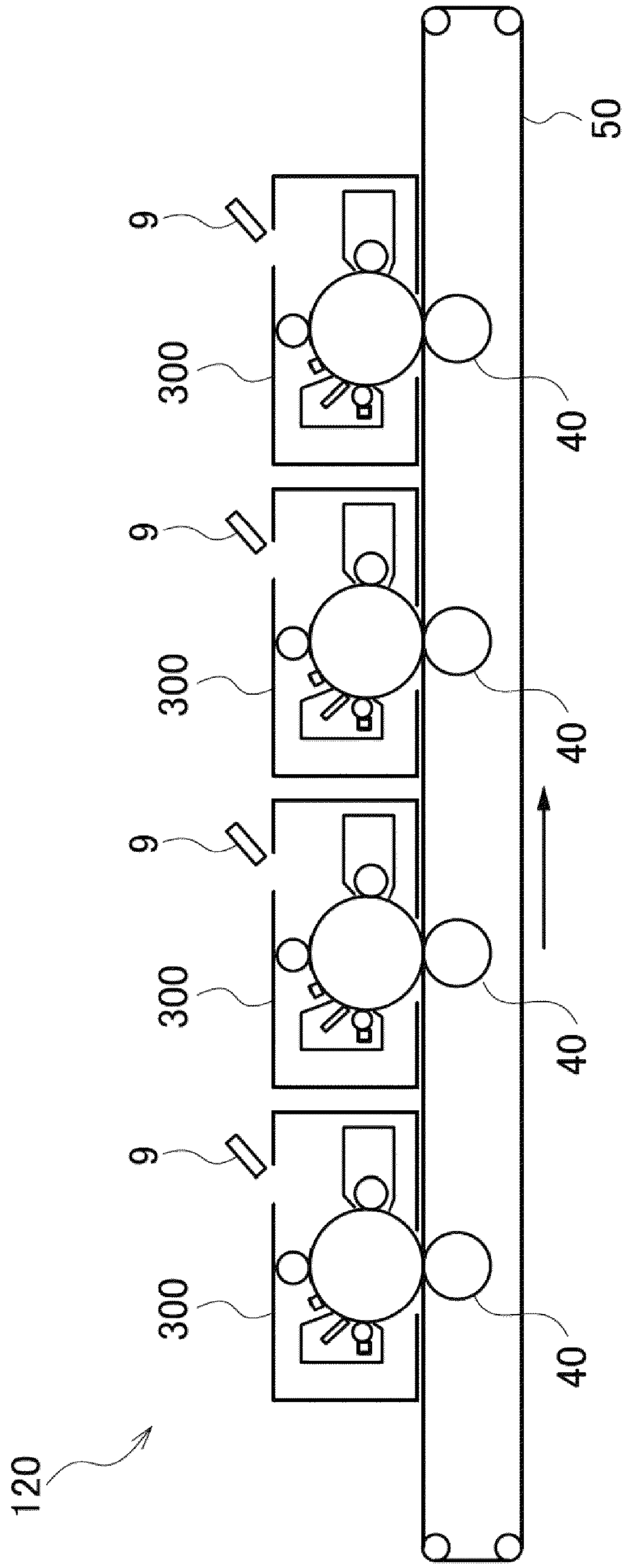

Europäisches Patentamt
European Patent Office
Office européen des brevets

# EUROPEAN SEARCH REPORT

Application Number
EP 25 17 3240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br>A | JP 2020 027195 A (FUJI XEROX CO LTD) 20 February 2020 (2020-02-20)<br>* paragraphs [0070] - [0071] *<br>* paragraphs [0078], [0080] *<br>* paragraphs [0092] - [0099] *<br>* paragraph [0139] *<br>* paragraph [0180] *<br>----- | 1-5,7-10<br>6 | INV.<br>G03G5/047<br>G03G5/05<br>G03G5/10<br>G03G5/14 |
| Y<br>A | JP 2018 054844 A (FUJI XEROX CO LTD) 5 April 2018 (2018-04-05)<br>* claims 1-9 *<br>* paragraph [0121] *<br>* paragraph [0160] *<br>* paragraphs [0057], [0062], [0070], [0080], [0081] *<br>----- | 1-5,7-10<br>6 | |
| Y<br>A | JP 2023 121553 A (FUJIFILM BUSINESS INNOVATION CORP) 31 August 2023 (2023-08-31)<br>* paragraphs [0370] - [0373] *<br>* paragraphs [0365] - [0368] *<br>* claims 1-12 *<br>----- | 1-5,7-10<br>6 | |

| TECHNICAL FIELDS SEARCHED (IPC) |
|---|
| G03G |

The present search report has been drawn up for all claims

| Place of search | Date of completion of the search | Examiner |
|---|---|---|
| The Hague | 30 October 2025 | Weiss, Felix |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 17 3240

This annex lists the patent family members relating to the patent documents cited in the above-mentioned European search report. The members are as contained in the European Patent Office EDP file on
The European Patent Office is in no way liable for these particulars which are merely given for the purpose of information.

30-10-2025

| Patent document cited in search report | Publication date | Patent family member(s) | Publication date |
|---|---|---|---|
| JP 2020027195 A | 20-02-2020 | NONE | |
| JP 2018054844 A | 05-04-2018 | NONE | |
| JP 2023121553 A | 31-08-2023 | CN 116627008 A | 22-08-2023 |
| | | JP 2023121553 A | 31-08-2023 |
| | | US 2023266684 A1 | 24-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013242483 A
- JP 6838324 B
- JP 2024043372 A
- JP 2021117377 A
- JP 2019035900 A
- JP 2019012141 A
- JP 2021071565 A
- JP 2021015223 A
- JP 2013097300 A
- WO 2019070003 A
- JP 2018159087 A
- JP 2021148818 A
- JP 19651959 B
- JP 401959 B
- JP 2023121553 A


### Non-patent literature cited in the description


- **W. M. EARECKSON**. *J. Poly. Sci.*, 1959, vol. XL399